(19) Europäisches Patentamt
European Patent Office
Office européen des brevets

(11) **EP 4 692 585 A1**

(12) **EUROPÄISCHE PATENTANMELDUNG**

(43) Veröffentlichungstag:
**11.02.2026 Patentblatt 2026/07**

(21) Anmeldenummer: 24193776.2

(22) Anmeldetag: **09.08.2024**

(51) Internationale Patentklassifikation (IPC):
**F16D 48/06** (2006.01)

(52) Gemeinsame Patentklassifikation (CPC):
**F16D 48/06;** F16D 2500/10412; F16D 2500/3027;
F16D 2500/30406; F16D 2500/30415;
F16D 2500/30421; F16D 2500/30426

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder:
• **Reiter, Dominik**
**Mannheim (DE)**
• **Fritz, Norbert**
**Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **VERFAHREN ZUM BETREIBEN EINER ANTRIEBSANORDNUNG, ANTRIEBSANORDNUNG UND ARBEITSMASCHINE**

(57) Die Erfindung betrifft ein Verfahren zum Betreiben einer Antriebsanordnung (20) oder einer Arbeitsmaschine (10). Die Antriebsanordnung (20) umfasst ein Hauptantriebselement (22), eine erste und zweite Kupplung (K1, K2) und einen Fahrantrieb (100). Das Verfahren umfasst die folgenden Schritte, das Ermitteln eines Solldrehmomentverlaufs der Antriebsanordnung (20), und das Ermittlung eines Schlupfpunktes an der ersten Kupplung (K1), und das Einstellen und/oder Verstellen der Richtung der Relativdrehzahl der ersten und zweiten Kupplung (K1, K2), wobei die Drehzahl des Hauptantriebselements (22) eingestellt und/oder verstellt wird, bis die Richtung der Relativdrehzahl der ersten und zweiten Kupplung (K1, K2) gleich ist, und die Übertragung des Drehmoments von der ersten Kupplung (K1) auf die zweite Kupplung (K2), wobei das Drehmoment der Antriebsanordnung (20) dem Solldrehmomentverlaufs folgt, und die Synchronisierung der zweiten Kupplung (K2). Die Erfindung betrifft weiter eine Antriebsanordnung (20) und eine Arbeitsmaschine (10).

FIG. 1

**Beschreibung**

Die Erfindung betrifft ein Verfahren zum Betreiben einer Antriebsanordnung gemäss dem Oberbegriff des unabhängigen Anspruchs 1, eine Antriebsanordnung gemäss dem Oberbegriff des unabhängigen Anspruchs 11 und eine Arbeitsmaschine gemäss dem Oberbegriff des unabhängigen Anspruchs 14.

Bei heutigen Arbeitsmaschinen, insbesondere Zugfahrzeugen, mit einem Motor, und beispielsweise mit einem Lastschaltgetriebe werden die Gänge durch überlappende Steuerung zweier Kupplungen geschaltet. Infolgedessen tritt bei diesen Kupplungen häufig ein Schlupf mit entgegengesetzten Vorzeichen auf, so dass es kurze Perioden gibt, in denen die Kupplungen ein Drehmoment in entgegengesetzter Richtung erzeugen. Dies erschwert die Steuerung des Drehmoments an der Ausgangswelle während des Schaltens. Aus diesem Grund ist der Schaltvorgang weniger komfortabel und spürbar.

Ausgehend von diesem Stand der Technik ist es eine Aufgabe der vorliegenden Erfindung eine gegenüber dem Stand der Technik verbessertes Verfahren und eine Antriebsanordnung und eine Arbeitsmaschine vorzuschlagen. Im Speziellen ist es eine Aufgabe der vorliegenden Erfindung ein Verfahren zum Betreiben einer Antriebsanordnung, eine Antriebsanordnung und eine Arbeitsmaschine vorzuschlagen, die konstruktiv einfacher und/oder kompakter ausgestaltet sind und/oder einen nahtlosen (engl. Seamless) oder einen nicht wahrnehmbaren Schaltvorgang ermöglichen.

Diese Aufgabe wird durch ein Verfahren zum Betreiben einer Antriebsanordnung mit den Merkmalen des Anspruchs 1 und eine Antriebsanordnung mit den Merkmalen des Anspruchs 11 und eine Arbeitsmaschine mit den Merkmalen des Anspruchs 14 gelöst. Die abhängigen Ansprüche beziehen sich auf besonders vorteilhafte Ausführungsformen der Erfindung.

Erfindungsgemäss wird ein Verfahren zum Betreiben einer Antriebsanordnung, insbesondere ein Verfahren zur Durchführung oder zum Betreiben eines Schaltvorgangs der Antriebsanordnung vorgeschlagen. Die Antriebsanordnung umfasst mindestens ein Hauptantriebselement und mindestens eine erste Kupplung, insbesondere eine zu öffnende Kupplung, und eine zweite Kupplung, insbesondere eine zu schliessende Kupplung, und einen Fahrantrieb, bevorzugt eine Ausgangswelle, besonders bevorzugt eine erste Ausgangswelle. Die erste und zweite Kupplung können Reibkupplungen sein.

Das Verfahren umfasst die folgenden Schritte:

i. Ermitteln eines Solldrehmomentverlaufs der Antriebsanordnung, bevorzugt des Fahrantriebs, besonders bevorzugt der Ausgangswelle, und

ii. Ermittlung eines Schlupfpunktes oder eines ersten Schlupfs an der ersten Kupplung, und

iii. Einstellen und/oder Verstellen, und insbesondere Ermitteln, der Richtung und/oder des Vorzeichens der Relativdrehzahl der ersten und zweiten Kupplung, bis die Richtung und/oder das Vorzeichen der Relativdrehzahl der ersten und zweiten Kupplung gleich oder identisch ist. Das Einstellen und/oder Verstellen der Richtung und/oder des Vorzeichens der Relativdrehzahl der ersten und zweiten Kupplung kann mit dem Hauptantriebselement erfolgen, insbesondere mit einer Drehzahländerung des Hauptantriebselements.

iv. Übertragung des Drehmoments von der ersten Kupplung auf die zweite Kupplung, wobei das Drehmoment der Antriebsanordnung, bevorzugt des Fahrantriebs, besonders bevorzugt der Ausgangswelle, dem Solldrehmomentverlaufs folgt, und

v. Synchronisierung der zweiten Kupplung, insbesondere indem die Drehzahl des Hauptantriebselements eingestellt und/oder verstellt wird. Im Speziellen kann die Synchronisierung der zweiten Kupplung insbesondere in Abhängigkeit von einem Betriebsmodus erfolgen.

Unter verbunden kann bevorzugt mechanisch verbunden, besonders bevorzugt antreibbar verbunden, also drehmoment- und/oder drehzahlübertragend verbunden, und/oder gekoppelt oder koppelbar, also mechanisch gekoppelt und/oder starr gekoppelt oder mechanisch koppelbar verstanden werden. Unter mechanisch verbunden, bevorzugt unter antreibbar verbunden und/oder gekoppelt oder koppelbar bzw. mechanisch gekoppelt oder mechanisch koppelbar kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen. Unter ermitteln kann insbesondere berechnen und/oder messen und/oder detektieren und/oder auswerten verstanden werden.

Die Schritte können in der Reihenfolge Schritt i. bis v. nacheinander oder zeitlich nacheinander ausgeführt werden. Die Schritte i. bis ii., insbesondere i. bis iii., können zeitgleich ausgeführt werden. Der Solldrehmomentverlauf kann ein Verlauf des Drehmoments während des Schaltvorgangs sein. Der Solldrehmomentverlauf kann der Drehmomentverlauf des Fahrantriebs, insbesondere der Ausgangswelle sein. Der Solldrehmomentverlauf kann insbesondere ein Verlauf des Drehmoments sein, bei welchem das Schaltverhalten nicht wahrnehmbar sein kann.

Das Ermitteln des Solldrehmomentverlaufs der Antriebsanordnung kann insbesondere in Abhängigkeit von einem Betriebsmodus und/oder einem historischen Drehmomentverlauf erfolgen. Der Solldrehmomentverlauf kann anhand der historischen Drehmomentverlaufs ermittelbar, insbesondere berechenbar sein. Im Speziellen kann das Ermitteln des Solldrehmomentverlaufs vor dem Schaltvorgang der Antriebsanordnung, also insbesondere vor der Übertragung des Drehmoments von der ersten auf die zweite Kupplung erfolgen.

Der Solldrehmomentverlauf kann durch Extrapolation, beispielsweise durch oder mit Entwicklung des zeitlichen Drehmomentverlaufs der 0. oder 1. oder höherer Ordnung, beispielsweise der N-ten Ordnung, also beispielsweise einer Taylorentwicklung, ermittelt werden:

$$T_A(t, t_0) = \sum_{n=0}^{N} \frac{f^{(n)}(t_0)}{n!} (t - t_0)^n$$

mit

$T_A(t, t_0)$ =Solldrehmomentverlauf, insbesondere in Abhängigkeit von der Zeit. Im Speziellen der Solldrehmomentverlauf des Fahrantriebs, insbesondere der Ausgangswelle.

Beispielsweise kann für den Solldrehmomentverlauf der 1. Ordnung gelten:

$$T_A(t, t_0) = T_0 + k(t - t_0)$$

mit

$T_0$ = Drehmoment zum Beginn des Schaltvorgangs, bevorzugt des Beginns der Übertragung des Drehmoments von der ersten Kupplung auf die zweite Kupplung.
k =Faktor zum Erhöhen oder Verringen, also insbesondere die Steigung, des Solldrehmomentverlaufs

Im Speziellen kann der Solldrehmomentverlauf ein konstanter Wert sein. Beispielsweise kann für den Solldrehmomentverlauf gelten

$$T_A(t) = T_0$$

mit

$T_A(t)$ =Solldrehmomentverlauf, insbesondere in Abhängigkeit von der Zeit. Im Speziellen der Solldrehmomentverlauf des Fahrantriebs, insbesondere der Ausgangswelle.
$T_0$ = Erstes Drehmoment = Drehmoment vor oder zum Beginn des Schaltvorgangs, insbesondere Drehmoment vor oder zum Beginn der Übertragung des Drehmoments von der ersten Kupplung auf die zweite Kupplung.

Die Betriebsmodi können die folgenden Modi sein:

- Betriebsmodus "Zug" mit "Zug-Hochschalten" - beispielsweise Beschleunigung der Antriebsanordnung oder der Arbeitsmaschine gegen Widerstand, z. B. bergauf oder mit erheblichem Rollwiderstand.
- Betriebsmodus "Zug" mit "Zug-Herunterschalten" - beispielsweise können die Antriebsanordnung oder die Arbeitsmaschine gegen Widerstand fahren (z. B. bergauf mit Anhänger) und können beispielsweise die Geschwindigkeit im aktuellen Gang nicht mehr halten und müssen aufgrund der Leistungsbegrenzung herunterschalten.
- Betriebsmodus "Schub" mit "Schub-Hochschalten" - beispielsweise Beschleunigung der Antriebsanordnung oder der Arbeitsmaschine bergab. Die Arbeitsmaschine muss hochschalten, da die Antriebsanordnung, insbesondere das Hauptantriebselement, eine Geschwindigkeitsbegrenzung erreicht hat. Der Kraftfluss im Antriebsstrang kann sich verzögern.
- Betriebsmodus "Schub" mit "Schub-Herunterschalten" - beispielsweise Verzögerung oder Bremsung der Antriebsanordnung oder der Arbeitsmaschine bergab mit der Verzögerungsleistung der Antriebsanordnung zur Begrenzung der Fahrzeuggeschwindigkeit.

Das Hauptantriebselement kann als Drehmoment- und/oder Drehzahlsensor ausgestaltet sein. Das Drehmoment und/oder die Drehzahl kann mit dem Hauptantriebselement ermittelt werden. Im Speziellen kann mit dem Hauptantriebselement das Drehmoment zum Beginn des Schaltvorgangs $T_0$ ermittelt werden. Der Solldrehmomentverlauf kann also vorteilhafterweise aus dem Drehmoment des Hauptantriebselements, beispielsweise aus den historischen Daten, und/oder insbesondere in Echtzeit und/oder unter Berücksichtigung des Übersetzungsverhältnisses sowie der Verluste ermittelt werden.

Die Ermittlung des Schlupfpunktes an der ersten Kupplung kann ohne Veränderung des Drehmoments am Fahrantrieb oder der Ausgangswelle erfolgen. Die Richtung und/oder das Vorzeichens der Relativdrehzahl, also insbesondere die Relativdrehzahlrichtung, der ersten und zweiten Kupplung kann eingestellt und/oder verstellt werden, indem die Drehzahl des Hauptantriebselements eingestellt und/oder verstellt wird. Die Richtung und/oder das Vorzeichens der Relativdrehzahl der ersten und zweiten Kupplung kann eingestellt und/oder verstellt werden, bis die Richtung und/oder das Vorzeichen der Relativdrehzahl der ersten und zweiten Kupplung gleich oder identisch ist. Im Speziellen kann mit dem Hauptantriebselement, insbesondere vor Beginn der Übertragung des Drehmoments, die Drehzahl der ersten und/oder zweiten Kupplung eingestellt und/oder verstellt werden, sodass beide Kupplungen die gleiche Richtung und/oder das gleiche Vorzeichens der Relativdrehzahl, also insbesondere die gleiche Relativdrehzahlrichtung, haben. Zusätzlich kann mit dem Hauptantriebselement während der Übertragung des Drehmoments die Drehzahl der ersten und/oder zweiten Kupplung eingestellt und/oder verstellt werden, sodass beide Kupplungen die gleiche Richtung und/oder das gleiche Vorzeichens der Relativdrehzahl, also insbesondere die gleiche Relativdrehzahlrichtung, haben.

Die Relativdrehzahl der ersten und/oder zweiten Kupplung kann, wenn die Kupplungen auf oder an einer Abtriebswelle des Hauptantriebselements, die insbesondere gleichzeitig eine Eingangswelle sein kann, angeordnet sind, wie folgt definiert sein:

$$\Delta n = n_{Abtrieb,i} - n_{Antrieb}$$

mit

$n_{Abtrieb,i}$ = Drehzahl der Abtriebsseite der i-ten Kupplung

$n_{Antrieb}$ = Drehzahl des Hauptantriebselements, insbesondere der Abtriebsseite des Hauptantriebselements

Es könne aber auch Kupplungen auf oder an der Abtriebswelle und weitere Kupplungen auf oder an der Ausgangswelle angeordnet sein. Die Antriebsdrehzahl wäre dann nicht für alle Kupplungen gleich.

Bei einem positiven Vorzeichen oder einer positiven Richtung kann also Drehmoment von der jeweiligen Kupplung auf das Hauptantriebselements übertragen werden kann (Generatorbetrieb) und bei einem negativen Vorzeichen oder einer negativen Richtung kann also Drehmoment vom Hauptantriebselement auf die jeweilige Kupplung übertragen werden (Motorbetrieb).

Das Hauptantriebselement kann als eine Energiemaschine, insbesondere als ein Motor oder ein Verbrennungsmotor oder ein Elektromotor ausgebildet sein. Alternativ kann das Hauptantriebselement ausgebildet sein. Das Hauptantriebselement kann motorisch und/oder generatorisch betreibbar sein. Das Hauptantriebselement kann die Antriebsanordnung mit einer Kraft und/oder einer Drehzahl und/oder einem Drehmoment antreiben, insbesondere also mit der ersten und zweiten Kupplung und dem Fahrantrieb, bevorzugt der Ausgangswelle, drehmoment- und/oder drehzahlübertragend verbunden, und/oder gekoppelt oder koppelbar sein. Das Hauptantriebselement kann einen Abtrieb und/oder eine Abtriebswelle umfassen. Das Hauptantriebselement, insbesondere der Abtrieb und/oder die Abtriebswelle, kann mit der ersten und zweiten Kupplung, und insbesondere dem Fahrantrieb, bevorzugt der Ausgangswelle, verbunden sein. Beispielsweise kann das Hauptantriebselement direkt oder über eine oder mit einer oder durch eine erste Übersetzungsstufe, insbesondere eine erste Stirnradstufe oder ein erstes Zahnradpaar oder einen ersten Planetensatz, oder ein erstes Getriebe mit der ersten Kupplung verbunden sein, insbesondere mit einer Antriebsseite der ersten Kupplung verbunden sein. Ebenso kann das Hauptantriebselement direkt oder über eine oder mit einer oder durch eine zweite Übersetzungsstufe, insbesondere eine zweite Stirnradstufe oder ein zweites Zahnradpaar oder einen zweiten Planetensatz, oder ein zweites Getriebe mit der zweiten Kupplung verbunden sein, insbesondere mit einer Antriebsseite der zweiten Kupplung verbunden sein.

Die erste Kupplung, insbesondere eine Abtriebsseite der ersten Kupplung, kann mit dem Fahrantrieb, bevorzugt der Ausgangswelle verbunden sein. Im Speziellen kann die erste Kupplung, insbesondere die Abtriebsseite der ersten Kupplung, direkt oder über eine oder mit einer oder durch eine dritte Übersetzungsstufe, insbesondere eine dritte Stirnradstufe oder ein drittes Zahnradpaar oder einen dritten Planetensatz, oder ein drittes Getriebe mit dem Fahrantrieb, bevorzugt der Ausgangswelle verbunden sein. Zusätzlich kann die zweite Kupplung, insbesondere eine Abtriebsseite der zweiten Kupplung, mit dem Fahrantrieb, bevorzugt der Ausgangswelle verbunden sein. Im Speziellen kann die zweite Kupplung, insbesondere die Abtriebsseite der zweiten Kupplung, direkt oder über eine oder mit einer oder durch eine vierte Übersetzungsstufe, insbesondere eine vierte Stirnradstufe oder ein viertes Zahnradpaar oder einen vierten Planetensatz, oder ein viertes Getriebe mit dem Fahrantrieb, bevorzugt der Ausgangswelle verbunden sein. Alternativ oder zusätzlich, kann ein Hauptgetriebe die erste und/oder zweite Kupplung und/oder den Fahrantrieb, bevorzugt die Ausgangswelle, umfassen. Alternativ kann der Fahrantrieb aber auch ein weiteres Getriebe, insbesondere ein Lastschaltgetriebe und/oder ein Mehrstufengetriebe, umfassen, wobei die Ausgangswelle mit dem weiteren Getriebe mechanisch verbunden sein kann. Das weitere Getriebe kann eine weitere Ausgangswelle umfassen und die weitere Ausgangswelle kann eine oder mehrere Fahrzeugachsen, insbesondere eine erste und/oder eine zweite Fahrzeugachse, antreiben. Dadurch kann die Spreizung der Antriebsanordnung erhöht werden.

Das Hauptantriebselement kann mit festem Übersetzungsverhältnis oder mit einem variablen Übersetzungsverhältnis mit dem Fahrantrieb, insbesondere der Ausgangswelle verbunden sein. Das Hauptantriebselement kann auch als Generator ausgebildet sein, und insbesondere in einem Rekuperationsbetrieb einen Energiespeicher aufladen. Das Hauptantriebselement kann direkt oder indirekt mit einem ersten Leistungsausgang verbunden sein. Die Antriebsanordnung kann eine Leistungselektronik umfassen, um die elektrische Leistung zwischen dem Hauptantriebselement und dem Energiespeicher zu übertragen, insbesondere wenn das Hauptantriebselement als ein Elektromotor ausgebildet ist.

Die Antriebsanordnung, insbesondere die Arbeitsmaschine, kann den oder die Energiespeicher umfassen. Der oder die Energiespeicher kann mit dem Hauptantriebselement elektrisch verbunden und/oder elektrisch koppelbar sein. Der Energiespeicher kann ein elektrischer Energiespeicher sein. Der Energiespeicher kann das angeschlossene Hauptantriebselement mit Energie, insbesondere elektrischer Energie versorgen. Der Energiespeicher kann mit dem Hauptantriebselement verbunden und/oder koppelbar sein, insbesondere elektrisch verbunden und/oder elektrisch koppelbar sein. Der Energiespeicher kann als eine Batterie und/oder ein Akku und/oder eine Superkondensator und/oder eine Brennstoffzelle und/oder eine sonstige Vorrichtung zur Speicherung von Energie, insbesondere elektrischer Energie, ausgebildet sein.

Der erste Leistungsausgang kann eine zweite Ausgangswelle umfassen und/oder als zweite Ausgangswelle ausgebildet sein. Ebenso kann der erste Leistungsausgang zusätzlich eine Zapfwelleneinheit umfassen. Die Zapfwelleneinheit kann ein Zapfwellengetriebe und/oder eine Zapfwelle umfassen. Die Zapfwelleneinheit, insbesondere das Zapfwellengetriebe, kann antriebsseitig mit der zweiten Ausgangswelle verbunden sein. Ausserdem kann die Zapfwelleneinheit, insbesondere das Zapfwellengetriebe, abtriebsseitig mit der Zapfwelle verbindbar oder verbunden sein.

Die Antriebsanordnung oder die Arbeitsmaschine kann eine Steuereinheit umfassen. Die Steuereinheit kann mit dem Hauptantriebselement signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Antriebsanordnung, insbesondere von Drehzahl- und/oder Drehmomentsensoren der Antriebsanordnung, und/oder dem Hauptantriebselement zu empfangen. Im Speziellen kann die Steuereinheit konfiguriert sein, ein Drehmoment und/oder eine Drehzahl der Antriebsanordnung, bevorzugt des Fahrantriebs, besonders bevorzugt der Ausgangswelle, zu ermitteln, insbesondere mit einem oder mehreren Drehzahl- und/oder Drehmomentsensor der Antriebsanordnung zu erfassen und ein Drehzahlsignal und/oder ein Drehmomentsignal von den Sensoren zu empfangen. Das Drehmoment der Antriebsanordnung, bevorzugt des Fahrantriebs, besonders bevorzugt der Ausgangswelle, kann ein Ist-Drehmoment sein und/oder die Drehzahl der Antriebsanordnung, bevorzugt des Fahrantriebs, besonders bevorzugt der Ausgangswelle, kann eine Ist-Drehzahl sein. Die Steuereinheit kann konfiguriert sein, das Ist-Drehmoment mit dem Solldrehmoment zu vergleichen, sodass ermittelt werden kann, ob das Drehmoment der Antriebsanordnung, bevorzugt des Fahrantriebs, besonders bevorzugt der Ausgangswelle, dem Solldrehmomentverlauf folgt. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die Drehzahl und/oder das Drehmoment der Antriebsanordnung, insbesondere des Hauptantriebselements, einzustellen und/oder zu verstellen, insbesondere eine vorgebbare Drehzahl und/oder ein vorgebbares Drehmoment einzustellen und/oder zu verstellen. Die Steuereinheit kann konfiguriert sein, die Drehzahl des ersten Leistungsausgangs einzustellen und/oder zu verstellen.

Bei der Synchronisierung kann die Drehzahl des Hauptantriebselements eingestellt und/oder verstellt werden, um die Relativdrehzahl Null in der zweiten Kupplung einzustellen und/oder zu verstellen, insbesondere zu erreichen.

Wesentlich für die Erfindung ist, dass das Verfahren die folgenden Schritte aufweist:

    i. Ermittlung Solldrehmomentverlauf
    ii. Schlupferkennung
    iii. Anpassen der Richtung oder des Vorzeichens der Relativdrehzahl
    iv. Übertragung des Drehmoments zwischen der ersten und zweiten Kupplung, wobei insbesondere das Drehmoment der Antriebsanordnung, bevorzugt des Fahrantriebs, besonders bevorzugt der Ausgangswelle, dem Solldrehmomentverlaufs folgt
    v. Synchronisation des Hauptantriebselements

Durch das Verfahren kann vorteilhafterweise ein nahtloser (engl. Seamless) und/oder "nicht wahrnehmbarer Schaltvorgang" (engl. Non-perceptible shifting) realisiert werden. Die Schlupferkennung kann vorteilhafterweise im Vergleich zu bekannten Schlupferkennungen, schneller erfolgen, insbesondere durch Verwendung des Drehmoments des Hauptantriebselements. Von Vorteil kann die Übertragung des Drehmoments durch das Verfahren mit einem konstanten Drehmoment oder einer nicht wahrnehmbaren Drehmomentsänderung am Fahrantrieb, insbesondere der Ausgangswelle erfolgen bzw. realisiert werden. Ebenso vorteilhaft kann das Hauptantriebselement als Drehzahl- und/oder Drehmomentsensor verwendet werden, bevorzugt zur Erhöhung der Genauigkeit der Kupplungsmodulation, besonders bevorzugt unter Berücksichtigung des dynamischen Simulationsmodells der Antriebsanordnung mit Trägheiten.

In Ausgestaltung der Erfindung umfasst das Ermitteln des Solldrehmomentverlaufs die folgenden Schritte:

- Ermitteln des ersten Drehmoments $T_0$ am Fahrantrieb, insbesondere der Ausgangswelle. Das Ermitteln des ersten Drehmoments $T_0$ kann insbesondere das Drehmoment vor oder zum Beginn des Schaltvorgangs oder vor oder zum Beginn der Übertragung sein, und/oder
- Ermitteln eines zweiten Drehmoments der Antriebsanordnung und das Ermitteln des ersten Drehmoments $T_0$ in Abhängigkeit vom oder mit dem zweiten Drehmoment. Das Ermitteln des zweiten Drehmoments kann insbesondere das Drehmoment vor oder zum Beginn des Schaltvorgangs oder vor der Übertragung sein, und/oder
- Ermitteln des Solldrehmomentverlaufs in Abhängigkeit vom oder mit dem ersten oder zweiten Drehmoment.

Das Ermitteln des ersten Drehmoments kann das Erfassen und/oder Berechnen des ersten Drehmoments am Fahrantrieb, insbesondere der Ausgangswelle, umfassen. Das Ermitteln des zweiten Drehmoments kann das Erfassen und/oder Berechnen des zweiten Drehmoments an der Antriebsanordnung umfassen, beispielsweise der ersten oder zweiten Kupplung oder dem Hauptantriebselement oder weiteren Komponenten der Antriebsanordnung. Das Ermitteln des zweiten Drehmoments kann, wenn das Hauptantriebselement als Elektromotor ausgebildet ist, mit der oder durch die Strom-Drehmomentkonstante oder einen Drehmomentsensor, insbesondere einen ersten Drehmomentsensor, an oder im Hauptantriebselement erfolgen. Das Ermitteln des zweiten Drehmoments kann, wenn das Hauptantriebselement als Verbrennungsmotor ausgebildet ist, mit der oder durch die Einspritzmenge oder den Drehmomentsensor, insbesondere den ersten Drehmomentsensor, an oder im Hauptantriebselement erfolgen. Der Solldrehmomentverlauf kann durch Extrapolation, wie oben bereits beschrieben, ermittelt werden.

In Ausgestaltung der Erfindung, umfasst das Ermitteln des Schlupfpunktes der ersten Kupplung den folgenden Schritt: Öffnen der ersten Kupplung, bevorzugt Verringern der Drehmomentkapazität der ersten Kupplung, besonders bevorzugt Verringern einer Stromstärke eines ersten Ventils der ersten Kupplung, bis die abtriebsseitige Drehzahl des Hauptantriebselements und die abtriebsseitige Drehzahl der ersten Kupplung oder die antriebsseitige Drehzahl der ersten Kupplung und die abtriebsseitige Drehzahl der ersten Kupplung (K1) verschieden sind. Im Speziellen kann das Öffnen der ersten Kupplung, ein Verstellen der Normalkraft in der ersten Kupplung umfassen. Im Speziellen umfasst das Ermitteln des Schlupfpunktes der ersten Kupplung die folgenden Schritte:

- Ermitteln der abtriebsseitigen Drehzahl des Hauptantriebselements und der abtriebsseitigen Drehzahl der ersten Kupplung oder der antriebsseitigen Drehzahl der ersten Kupplung und der abtriebsseitigen Drehzahl der ersten Kupplung, und
- Vergleich der abtriebsseitigen Drehzahl des Hauptantriebselements mit der abtriebsseitigen Drehzahl der ersten Kupplung, und
- Verringern der Drehmomentkapazität der ersten Kupplung, bevorzugt Verringern der Stromstärke des ersten Ventils der ersten Kupplung, wenn die abtriebsseitige Drehzahl des Hauptantriebselements und die abtriebsseitige Drehzahl der ersten Kupplung gleich oder identisch sind, bis die abtriebsseitige Drehzahl des Hauptantriebselements und die abtriebsseitige Drehzahl der ersten Kupplung verschieden sind.

Mit anderen Worten, das Ermitteln des Schlupfpunktes der ersten Kupplung kann die folgenden Schritte umfassen:

a) Ermitteln der abtriebsseitigen Drehzahl des Hauptantriebselements und der abtriebsseitigen Drehzahl der ersten Kupplung oder der antriebsseitigen Drehzahl der ersten Kupplung und der abtriebsseitigen Drehzahl der ersten Kupplung, und

b) Vergleich der abtriebsseitigen Drehzahl des Hauptantriebselements oder der antriebsseitigen Drehzahl der ersten Kupplung mit der abtriebsseitigen Drehzahl der ersten Kupplung, und

c) Verringern der Drehmomentkapazität der ersten Kupplung, bevorzugt Verringern der Stromstärke des ersten Ventils der ersten Kupplung, wenn die abtriebsseitige Drehzahl des Hauptantriebselements und die abtriebsseitige Drehzahl der ersten Kupplung gleich oder identisch sind, und

d) Wiederholen der Schritte a) bis c), bis die abtriebsseitige Drehzahl des Hauptantriebselements und die abtriebsseitige Drehzahl der ersten Kupplung verschieden sind.

Je nach Aufbau der Antriebsanordnung kann die abtriebsseitige Drehzahl des Hauptantriebselementes nicht gleich der antriebsseitigen Drehzahl der ersten Kupplung sein. In diesem Fall kann aber antriebsseitigen Drehzahl der ersten Kupplung aus dem Zustand und/oder dem Aufbau der Antriebsanordnung und der abtriebsseitigen Drehzahl des Hauptantriebselements ermittelt, insbesondere berechnet werden.

Ebenso kann das Ermitteln des Schlupfpunktes der ersten Kupplung die folgenden Schritte umfassen:

a) Schnelles Öffnen der ersten Kupplung, bevorzugt schnelles Verringern der Drehmomentkapazität der ersten Kupplung, insbesondere bis zu einer oberen Drehmomentkapazität, oder bevorzugt schnelles Verringern der Stromstärke des ersten Ventils der ersten Kupplung, insbesondere bis zu einer oberen Stromstärke, und
b) Ermitteln der abtriebsseitigen Drehzahl des Hauptantriebselements oder der antriebsseitigen Drehzahl der ersten Kupplung und der abtriebsseitigen Drehzahl der ersten Kupplung, und
c) Vergleich der abtriebsseitigen Drehzahl des Hauptantriebselements oder der antriebsseitigen Drehzahl der ersten Kupplung mit der abtriebsseitigen Drehzahl der ersten Kupplung, und
d) Verringern der Drehmomentkapazität der ersten Kupplung, bevorzugt Verringern der Stromstärke des ersten Ventils der ersten Kupplung, wenn die abtriebsseitige Drehzahl des Hauptantriebselements oder die antriebsseitige Drehzahl der ersten Kupplung und die abtriebsseitige Drehzahl der ersten Kupplung gleich oder identisch sind, und
e) Wiederholen der Schritte b) bis d), bis die abtriebsseitige Drehzahl des Hauptantriebselements oder die antriebsseitige Drehzahl der ersten Kupplung und die abtriebsseitige Drehzahl der ersten Kupplung verschieden sind.

Schritt d) kann als Rampe oder Rampenfunktion von der oberen Drehmomentkapazität, oder der oberen Stromstärke bis zur Drehmomentkapazität oder Stromstärke am Schlupfpunkt ausgeführt werden. Das schnelle Verringern der Drehmomentkapazität oder das schnelle Verringern der Stromstärke des ersten Ventils kann ein absenken oder verringern insbesondere innerhalb von $t \leq 50$ ms, $t \leq 20$ ms, $t \leq 10$ ms bedeuten. Die oberen Drehmomentkapazität kann grösser als die Drehmomentkapazität am Schlupfpunkt sein. Alternativ oder zusätzlich kann die obere Stromstärke grösser als die Stromstärke am Schlupfpunkt sein. Die oberen Drehmomentkapazität und die obere Stromstärke kann mit dem oder durch das Drehmoment, insbesondere das erste Drehmoment, des Hauptantriebselements oder der antriebsseitigen Drehzahl der ersten Kupplung ermittelt werden. Die Stromstärke kann aus der Drehmomentbestimmung des Hauptantriebselementes oder der antriebsseitigen Drehzahl der ersten Kupplung abgeleitet werden.

Die erste und zweite Kupplung können mit der Steuereinheit signalverbunden und/oder wirkend gekoppelt und/oder signalübertragend und/oder datenleitend verbunden sein. Im Speziellen kann die Antriebsanordnung das erste Ventil oder eine erste Ventilanordnung, insbesondere ein erstes Steuerventil, oder einen ersten Aktuator zum Ansteuern und/oder Einstellen und/oder Verstellen der ersten Kupplung umfassen. Das erste Ventil oder die erste Ventilanordnung oder der erste Aktuator können mit der ersten Kupplung verbunden sein. Ebenso kann die Antriebsanordnung das zweite Ventil oder eine zweite Ventilanordnung, insbesondere ein zweites Steuerventil, oder einen zweiten Aktuator zum Ansteuern und/oder Einstellen und/oder Verstellen der zweiten Kupplung umfassen. Das zweite Ventil oder die zweite Ventilanordnung oder der zweite Aktuator können mit der zweiten Kupplung verbunden sein. Die Steuereinheit kann mit dem ersten und/oder zweiten Ventil oder der ersten und/oder zweiten Ventilanordnung oder dem ersten und/oder zweiten Aktuator signalverbunden und/oder wirkend gekoppelt und/oder signalübertragend und/oder datenleitend verbunden sein. Die Steuereinheit kann konfiguriert sein, die erste Kupplung, insbesondere über das oder mit dem ersten Ventil oder die erste Ventilanordnung oder den ersten Aktuator, anzusteuern und/oder einzustellen und/oder zu verstellen. Die Steuereinheit kann konfiguriert sein, die erste Kupplung, insbesondere über das oder mit dem ersten Ventil oder die erste Ventilanordnung oder den ersten Aktuator, in die erste oder zweite Position einzustellen und/oder zu verstellen, insbesondere auch von der ersten in die zweite Position zu bewegen und umgekehrt. Die Steuereinheit kann konfiguriert sein, die zweite Kupplung, insbesondere über das oder mit dem zweiten Ventil oder die zweite Ventilanordnung oder den zweiten Aktuator, anzusteuern und/oder einzustellen und/oder zu verstellen. Die Steuereinheit kann konfiguriert sein, die zweite Kupplung, insbesondere über das oder mit dem zweiten Ventil oder die zweite Ventilanordnung oder den zweiten Aktuator, in die erste oder zweite Position einzustellen und/oder zu verstellen, insbesondere auch von der ersten in die zweite Position zu bewegen und umgekehrt. Die Antriebsanordnung weist die oben genannten Vorteile auf. Vorteilhafterweise kann ausserdem die Ermittlung des Schlupfpunktes an der ersten Kupplung sehr schnell erfolgen, insbesondere schneller als im Stand der Technik. Mit anderen Worten, vorteilhafterweise kann durch obige Massnahme eine schnelle Erkennung des Schlupfpunktes realisiert werden.

In Ausgestaltung der Erfindung erfolgt das Einstellen und/oder Verstellen der Richtung und/oder des Vorzeichens der Relativdrehzahl, also insbesondere der Relativdrehzahlrichtung, der ersten und zweiten Kupplung in Abhängigkeit vom Betriebsmodus. Im Speziellen umfasst das Einstellen und/oder Verstellen der Richtung und/oder des Vorzeichens der Relativdrehzahl der ersten und zweiten Kupplung die folgenden Schritte:

•   Verringern der Drehzahl des Hauptantriebselements, wenn die Antriebsanordnung in einem der Modi des Betriebsmodus "Schub" betrieben wird, bis die Richtung und/oder das Vorzeichen der Relativdrehzahl der ersten und zweiten Kupplung gleich oder identisch ist, oder

- Erhöhen der Drehzahl des Hauptantriebselements, wenn die Antriebsanordnung in einem der Modi des Betriebsmodus "Zug" betrieben wird, bis die Richtung und/oder das Vorzeichen der Relativdrehzahl der ersten und zweiten Kupplung gleich oder identisch ist.

Die Schritte können durchgeführt werden, wenn die erste Kupplung bis zum beginnenden Schlupf geöffnet ist und noch annähernd das volle Drehmoment überträgt, aber bevor die zweite Kupplung geschlossen wird.

Im Betriebsmodus "Zug" mit "Zug-Hochschalten" und "Zug-Herunterschalten" können dadurch vorteilhafterweise beide Kupplungen antreiben oder fahren. Im Betriebsmodus "Schub" mit "Schub-Hochschalten" und "Schub-Herunterschalten" können dadurch vorteilhafterweise beide Kupplungen bremsen.

In Ausgestaltung der Erfindung umfasst das Verfahren die folgenden Schritte:

- Durchführung eines Füllschritts, bei welchem die zweite Kupplung mit einem Fluid, beispielsweise Hydrauliköl oder ähnliches befüllt wird, bevorzugt die Stromstärke des zweiten Ventils der zweiten Kupplung bis zu einer maximalen Stromstärke erhöht und wieder verringert wird, und/oder
- Durchführung eines Entleerungsschritt, bei welchem die erste Kupplung von einem Fluid entleert wird.

Der Füllschritt kann vor der Übertragung des Drehmoments und nach der Ermittlung des Schlupfpunktes erfolgen oder durchgeführt werden. Der Füllschritt kann eine Übertragung des Drehmoments der zweiten Kupplung einleiten. Das Erhöhen der Drehmomentkapazität bis zu einer maximalen Drehmomentkapazität, bevorzugt das Erhöhen der Stromstärke des zweiten Ventils der zweiten Kupplung bis zu einer maximalen Stromstärke kann ein Aktuator der zweiten Kupplung an ein Lamellenpaket der zweiten Kupplung heranbewegt werden (engl. Fill pulse). Der Entleerungsschritt kann während oder nach der Synchronisierung erfolgen oder durchgeführt werden.

In Ausgestaltung der Erfindung umfasst das Übertragen des Drehmoments von der ersten Kupplung auf die zweite Kupplung die folgenden Schritte:

- Öffnen der ersten Kupplung in Abhängigkeit von einem Öffnungsverlauf, insbesondere einem vorgegebenen Öffnungsverlauf, und
- Schliessen der zweiten Kupplung in Abhängigkeit vom Öffnungsverlauf der ersten Kupplung, sodass insbesondere das Drehmoment des Fahrantriebs, bevorzugt der Ausgangswelle, dem Solldrehmomentverlauf folgt. Im Speziellen kann zusätzlich das Ist-Drehmoment mit dem Solldrehmomentverlauf verglichen werden.

Die Schritte können gleichzeitig erfolgen. Die Schritte können wiederholt werden, bis die erste Kupplung kein Drehmoment und die zweite Kupplung das gesamte Drehmoment überträgt. Optional kann das Drehmoment des Hauptantriebselements, insbesondere während die erste Kupplung geöffnet und die zweite Kupplung geschlossen wird, eingestellt und/oder verstellt werden, sodass das Vorzeichen der Relativdrehzahl der ersten und zweiten Kupplung während der Übertragung des Drehmoments identisch oder gleich ist. Der Öffnungsverlauf, insbesondere der Verlauf des Drehmoments der ersten Kupplung, bevorzugt während der Übertragung, kann unter den folgenden Annahmen ermittelt, insbesondere vorgegeben werde. Die Übersetzungsverhältnisse beim Schaltvorgang, also die Übertragung des Drehmoments von der ersten auf die zweite Kupplung, können wie folgt sein:

$$i_1 = \frac{n_{Antrieb}}{n_1} \qquad\qquad i_2 = \frac{n_{Antrieb}}{n_2} \qquad\qquad q = \frac{i_1}{i_2}$$

mit

$i_1$ = Übersetzung an der ersten Kupplung
$n_1$ = Drehzahl an der ersten Kupplung, insbesondere der Abtriebsseite der ersten Kupplung
$i_2$ = Übersetzung an der zweiten Kupplung
$n_2$ = Drehzahl an der zweiten Kupplung, insbesondere der Abtriebsseite der zweiten Kupplung
$n_{Antrieb}$ = Drehzahl des Hauptantriebselements, insbesondere der Abtriebsseite des Hauptantriebselements
$q$ = Quotient der Übersetzungsverhältnisse

Der Öffnungsverlauf, insbesondere der Verlauf des Drehmoments der ersten Kupplung, bevorzugt während der Übertragung, kann durch oder mit Extrapolation, beispielsweise durch oder mit Entwicklung des zeitlichen Drehmomentverlaufs der ersten Kupplung der 0. oder 1. oder höherer Ordnung, beispielsweise der N-ten Ordnung, also beispielsweise einer Taylorentwicklung, ermittelt und/oder dargestellt werden:

$$T_1(t, t_0) = \sum_{n=0}^{N} \frac{f^{(n)}(t_0)}{n!} (t - t_0)^n$$

mit

$T_1(t, t_0)$ = Öffnungsverlauf, insbesondere der Verlauf des Drehmoments der ersten Kupplung in Abhängigkeit von der Zeit, bevorzugt während der Übertragung.

Beispielsweise kann für den Öffnungsverlauf der 1. Ordnung, also einen linearen Öffnungsverlauf, gelten:

$$T_1(t, t_0) = \frac{T_A(t_0)}{i_1} \left( \frac{T - (t - t_0)}{T} \right)$$

mit

$T_A(t_0) = T_0$ = Drehmoment vor oder zum Beginn des Schaltvorgangs, bevorzugt vor oder bei Beginn der Übertragung des Drehmoments von der ersten Kupplung auf die zweite Kupplung. Im Speziellen der Solldrehmomentverlauf des Fahrantriebs, insbesondere der Ausgangswelle.

$T$ = Dauer der Übertragung des Drehmoments.

$t_0$ = Zeitpunkt des Beginns der Übertragung.

Für das Schliessen der zweiten Kupplung in Abhängigkeit vom Öffnungsverlauf der ersten Kupplung ergibt sich:

$$T_2(t, t_0) = \frac{T_A(t_0) \cdot \left( 1 - \frac{T - (t - t_0)}{T} \right)}{i_2}$$

mit

$T_2(t_0)$ = Verlauf des Drehmoments der zweiten Kupplung in Abhängigkeit vom Öffnungsverlauf der ersten Kupplung, bevorzugt während der Übertragung.

$T$ = Dauer der Übertragung des Drehmoments.

$t_0$ = Zeitpunkt des Beginns der Übertragung.

Das Öffnen der ersten Kupplung kann das Verringern oder Senken der Drehmomentkapazität, bevorzugt das Verringern oder Senken der Stromstärke des ersten Ventils der ersten Kupplung umfassen. Das Schliessen der zweiten Kupplung kann das Erhöhen der Drehmomentkapazität, bevorzugt das Erhöhen der Stromstärke des zweiten Ventils der zweiten Kupplung umfassen. Das Öffnen der ersten Kupplung und das Schliessen der zweiten Kupplung kann in diskreten Schritten erfolgen. Dabei kann das Drehmoment der Kupplungen in diskreten Schritten eingestellt und/oder verstellt werden, wobei die diskreten Schritte dem Öffnungsverlauf folgen. Vorteilhafterweise kann so das Verfahren als ein nahtloser Schaltvorgang erfolgen.

In Ausgestaltung der Erfindung umfasst die Synchronisierung der zweiten Kupplung die folgenden Schritte, insbesondere nach abgeschlossener Drehmomentübergabe, bei schleifender Kupplung:

- Erhöhen der Drehzahl des Hauptantriebselements, wenn die Antriebsanordnung in einem Betriebsmodus "Schub" betrieben wird, oder
- Verringern der Drehzahl des Hauptantriebselements, wenn die Antriebsanordnung in einem Betriebsmodus Zug betrieben wird.

Die Synchronisierung kann insbesondere nach der Übertragung des Drehmoments erfolgen.

In Ausgestaltung der Erfindung erfolgen nach der Synchronisierung die folgenden Schritte:

- Vollständiges Öffnen der ersten Kupplung, bevorzugt Verringern oder Senken der Drehmomentkapazität der ersten Kupplung, besonders bevorzugt der Stromstärke des ersten Ventils der ersten Kupplung auf 0, und/oder
- Entleeren der Kupplung, und/oder
- Schliessen der zweiten Kupplung, bevorzugt Erhöhen der Drehmomentkapazität auf die maximale oder beispielsweise die doppelte Drehmomentkapazität, besonders bevorzugt Erhöhen der Stromstärke des zweiten Ventils der zweiten Kupplung auf die max. Stromstärke.

Die Erfindung betrifft weiter eine Antriebsanordnung zur Durchführung eines Verfahrens, insbesondere eines Verfahrens nach einem der Ansprüche 1 bis 10. Die Antriebsanordnung weist die oben beschriebenen Vorteile des Verfahrens auf.

In Ausgestaltung der Erfindung umfasst die Antriebsanordnung ein Hauptantriebselement, eine erste und zweite Kupplung und einen Fahrantrieb, insbesondere eine Ausgangswelle. Die Antriebsanordnung ist derart betreibbar, dass:

i. Ein Solldrehmomentverlauf der Antriebsanordnung ermittelbar ist, und

ii. ein Schlupfpunkt an der ersten Kupplung ermittelbar ist, und

iii. Die Richtung der Relativdrehzahl der ersten und zweiten Kupplung einstellbar und/oder verstellbar ist, wobei die Drehzahl des Hauptantriebselements eingestellt und/oder verstellt wird, bis die Richtung der Relativdrehzahl der ersten und zweiten Kupplung gleich oder identisch ist, und

iv. das Drehmoment von der ersten Kupplung auf die zweite Kupplung übertragbar ist, wobei insbesondere bei der Übertragung das Öffnen der ersten Kupplung in Abhängigkeit von einem Öffnungsverlauf und das Schliessen der zweiten Kupplung in Abhängigkeit vom Öffnungsverlauf der ersten Kupplung erfolgt, wobei insbesondere das Drehmoment der Antriebsanordnung, bevorzugt des Fahrantriebs, besonders bevorzugt der Ausgangswelle, dem Solldrehmomentverlauf folgt, und

v. die zweite Kupplung synchronisierbar ist, indem die Drehzahl des Hauptantriebselements eingestellt und/oder verstellt wird.

Mit anderen Worten, die Antriebsanordnung kann eine Steuereinheit umfassen. Die Steuereinheit kann konfiguriert sein:

- Ein Solldrehmomentverlaufs der Antriebsanordnung, bevorzugt des Fahrantriebs, besonders bevorzugt der Ausgangswelle zu ermitteln, insbesondere in Abhängigkeit von einem Schaltvorgang der Antriebsanordnung, und
- Einen Schlupfpunkt an der ersten Kupplung zu ermitteln, und
- Die Richtung oder das Vorzeichens der Relativdrehzahl der ersten und zweiten Kupplung einzustellen und/oder zu verstellen, wobei die Steuereinheit weiter konfiguriert ist, die Drehzahl des Hauptantriebselements einzustellen und/oder zu verstellen, bis die Richtung oder das Vorzeichen der Relativdrehzahl der ersten und zweiten Kupplung gleich oder identisch ist, und
- das Drehmoment von der ersten Kupplung auf die zweite Kupplung zu übertragen, wobei insbesondere bei der Übertragung das Öffnen der ersten Kupplung in Abhängigkeit von einem Öffnungsverlauf und das Schliessen der zweiten Kupplung in Abhängigkeit vom Öffnungsverlauf der ersten Kupplung erfolgt, und
- die zweite Kupplung zu synchronisieren, indem die Drehzahl des Hauptantriebselements eingestellt und/oder verstellt wird.

In Ausgestaltung der Erfindung ist das Hauptantriebselement mit der ersten und zweiten Kupplung verbunden. Die erste und/oder zweite Kupplung kann mit dem Fahrantrieb, insbesondere der Ausgangswelle verbunden sein. Mit oder durch das Hauptantriebselement kann eine erzeugbare Rotationsbewegung und/oder ein erzeugbares Drehmoment, insbesondere über eine erste oder mit einer ersten Welle, in das Hauptgetriebe oder die erste und/oder zweite Kupplung einleitbar ist und durch die Rotationsbewegung und/oder das Drehmoment des Hauptantriebselements wenigstens der Fahrantrieb, insbesondere die Ausgangswelle, bevorzugt über das Hauptgetriebe oder die erste und/oder zweite Kupplung, antreibbar ist.

Die Erfindung betrifft weiter eine Arbeitsmaschine, insbesondere zur Durchführung eines Verfahrens nach einem der Ansprüche 1 bis 10, umfassend eine Antriebsanordnung nach einem der Ansprüche 11 bis 13. Die Arbeitsmaschine kann eine Baumaschine oder ein Zugfahrzeug, bevorzugt ein landwirtschaftliches Zugfahrzeug, beispielsweise ein Traktor oder Schlepper, oder ein PKW oder ein Fahrzeug sein. Die Arbeitsmaschine weist die oben beschriebenen Vorteile der Antriebsanordnung auf.

Die erste Fahrzeugachse und/oder zweite Fahrzeugachse können durch die oder über eine Rotationsbewegung und/oder das Drehmoment des Hauptantriebselements antreibbar sein, insbesondere über den Fahrantrieb oder die Ausgangswelle. Die Arbeitsmaschine umfasst die Antriebsanordnung. Die Antriebsanordnung ist zum Antreiben der Arbeitsmaschine ausgebildet. Die Arbeitsmaschine kann eine, zwei oder mehrere Achse(n) umfassen. Im Speziellen kann die Arbeitsmaschine die erste und/oder eine zweite Fahrzeugachse umfassen. Die erste und/oder zweite Fahrzeugachse können mit dem Fahrantrieb, insbesondere der Ausgangswelle verbunden sein. Die Arbeitsmaschine kann mit einer Drehzahl und/oder Kraft und/oder einem Drehmoment des Hauptantriebselements antreibbar sein. Die erste Fahrzeugachse kann dabei eine Vorderachse, insbesondere eine lenkbare Vorderachse, und/oder die zweite Fahrzeugachse eine Hinterachse sein.

Die Steuereinheit kann zur Steuerung und/oder Regelung, insbesondere zum Einstellen und/oder Verstellen, der Arbeitsmaschine eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen.

Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik des Antriebsanordnung sein. Die Arbeitsmaschine kann den ersten Leistungsausgang, insbesondere die Zapfwelleneinheit umfassen. Die Steuereinheit kann konfiguriert sein, die Antriebsanordnung und/oder die Achse und/oder Arbeitsmaschine mit einem Fahrsignal einzustellen und/oder zu verstellen und/oder anzusteuern und mit dem oder basierend auf dem Fahrsignal eine Geschwindigkeit des Zugfahrzeugs einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein.

Die Arbeitsmaschine kann einen Geschwindigkeitssensor, beispielsweise einen Drehzahlsensor, zur Erfassung einer Geschwindigkeit der Arbeitsmaschine umfassen. Die Steuereinheit kann konfiguriert sein, die Antriebsanordnung und/oder die Arbeitsmaschine, insbesondere das Hauptantriebselement und/oder die Zapfwelleneinheit einzustellen und/oder zu verstellen und/oder anzusteuern, beispielsweise indem die Steuereinheit konfiguriert ist, die Ventile und/oder Ventilanordnungen dieser Komponenten einzustellen und/oder zu verstellen und/oder anzusteuern. Im Speziellen kann die Steuereinheit konfiguriert sein, eine Kraft und/oder ein Drehmoment und/oder eine Drehzahl des Hauptantriebselements einzustellen und/oder zu verstellen und/oder anzusteuern.

Die Antriebsanordnung und/oder die Arbeitsmaschine kann die Leistungselektronik umfassen. Die Leistungselektronik und/oder der Energiespeicher kann/können in der Steuereinheit integriert sein oder als externe Einheit(en) von der Steuereinheit ansteuerbar sein. Die Leistungselektronik kann ein elektronisches Steuergerät und/oder einen Inverter und/oder einen Spannungswandler umfassen. Im Betrieb kann der Inverter die Spannung des Energiespeichers in eine Spannung oder Energie oder Leistung umwandeln, welche das Hauptantriebselement benötigen. Zum Aufladen des Energiespeichers kann dieser Vorgang umgekehrt werden. Die Steuereinheit kann eine Recheneinheit, einen Computer, einen Prozessor, einen Speicher und/oder alle Software, Hardware, Algorithmen, Anschlüsse, insbesondere auch Sensoren, umfassen, die für die Einstellung und/oder Verstellung der Antriebsanordnung, insbesondere des Hauptantriebselement erforderlich sind. Der Energiespeicher kann von einer geeigneten Steuerelektronik ansteuerbar sein, um elektrische Energie und/oder Leistung zu speichern und/oder abzugeben. Die Steuereinheit und/oder das Hauptantriebselement können mit der Leistungselektronik und/oder dem Energiespeicher elektrisch verbunden und/oder elektrisch koppelbar sein. Ausserdem kann über oder mit der Leistungselektronik die Versorgung der Antriebsanordnung, insbesondere der ersten und/oder zweiten und/oder dritten Energiemaschinen und/oder des Energiespeichers mit Spannung und/oder Strom und/oder Energie und/oder Leistung gesteuert und/oder einstellbar und/oder verstellbar sein.

Das Hauptantriebselement und/oder die Leistungselektronik und/oder der Energiespeicher und/oder die Zapfwelleneinheit können mit der Steuereinheit betreibbar, bevorzugt steuerbar und/oder regelbar, besonders bevorzugt ansteuerbar und/oder einstellbar und/oder verstellbar sein. Die Steuereinheit kann Signale zur Steuerung des Betriebs der Antriebsanordnung und/oder der Achse und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS- und/oder CAN-Standard entspricht. Die Steuereinheit kann als ein elektronisches Modul, ein eingebettetes System, eine Recheneinheit, ein Computer, als ein Modul zum Steuern und/oder Regeln der Antriebsanordnung und/oder der Achse und/oder der Arbeitsmaschine ausgebildet sein. Die Steuereinheit kann einen oder mehrere Prozessoren und Speicher und/oder alle Software, Hardware, Algorithmen, Anschlüsse, insbesondere auch Sensoren, umfassen, die für die Steuerung und/oder Regelung der Antriebsanordnung und/oder der Achse und/oder der Arbeitsmaschine erforderlich sind. Verfahren können als Programm oder Algorithmus ausgebildet sein, welches auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsanordnung und/oder der Achse und/oder der Arbeitsmaschine und die erforderlichen Aufgaben zur Steuerung und/oder Regelung des Betriebs der Antriebsanordnung und/oder der Achse und/oder der Arbeitsmaschine, zu steuern und/oder zu regeln und/oder auszuführen. Die Steuereinheit kann mit den Bauteilen der Antriebsanordnung und/oder der Arbeitsmaschine, also insbesondere dem Hauptantriebselement und/oder der Leistungselektronik und/oder dem Energiespeicher und/oder den Sensoren, beispielsweise einem oder mehreren Geschwindigkeitssensor und/oder Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsanordnung und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnlichem erfolgen. Die Steuereinheit kann unmittelbar mit der an oder in der Arbeitsmaschine angeordneten Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:

Fig. 1    eine schematische Darstellung eines ersten Ausführungsbeispiels einer erfindungsgemässen Arbeitsmaschine, insbesondere eines landwirtschaftlichen Zugfahrzeugs in Form eines Schleppers, und

Fig. 2    eine schematische Darstellung eines ersten Ausführungsbeispiels der erfindungsgemässen Antriebsanordnung, und

Fig. 3    ein schematisches Flussdiagramm des erfindungsgemässen Verfahrens, und

Fig. 4    eine schematische Darstellung eines ersten Ausführungsbeispiels des erfindungsgemässen Verfahrens, und

Fig. 5    eine schematische Darstellung eines zweiten Ausführungsbeispiels des erfindungsgemässen Verfahrens, und

Fig. 6    eine schematische Darstellung eines dritten Ausführungsbeispiels des erfindungsgemässen Verfahrens, und

Fig. 7    eine schematische Darstellung eines vierten Ausführungsbeispiels des erfindungsgemässen Verfahrens, und

Fig. 8    eine schematische Darstellung der Betriebsmodi.

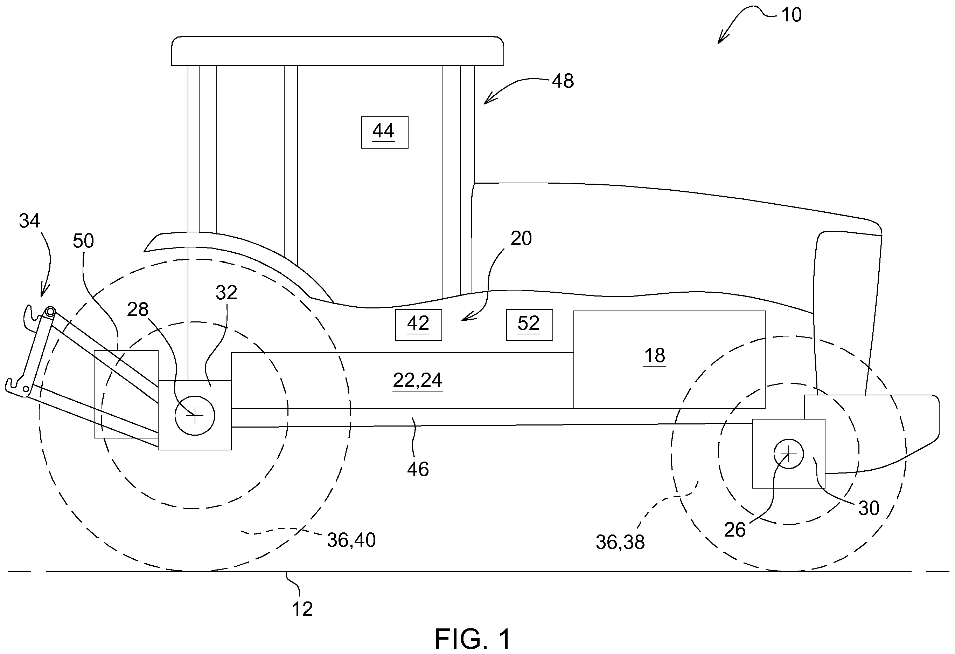

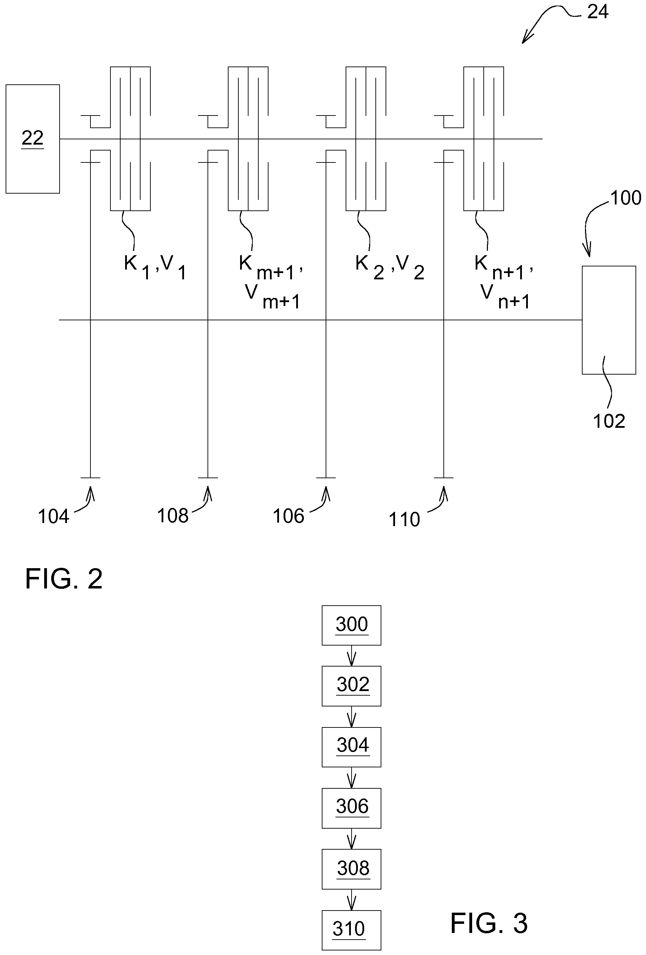

Figur 1 zeigt eine schematische Darstellung eines ersten Ausführungsbeispiels einer Arbeitsmaschine 10, insbesondere eines landwirtschaftlichen Zugfahrzeugs, das in Form eines Schleppers (Traktors) ausgeführt ist. Die in einer Vorwärtsrichtung V, beispielsweise über ein Feld, bewegbar Arbeitsmaschine 10 umfasst ein tragendes Gestell 16, das sich durch zwei Achsen auf dem Erdboden abstützt. Die Arbeitsmaschine 10 umfasst eine Antriebsanordnung 20, insbesondere eine erfindungsgemässe Antriebsanordnung 20. Die Antriebsanordnung 20 umfasst ein Hauptantriebselement 22 und eine erste und zweite Kupplung K1, K2 sowie einen Fahrantrieb 100, insbesondere eine Ausgangswelle 102 (siehe Figur 2). Das Hauptantriebselement 22 kann als eine Energiemaschine, insbesondere als ein Motor oder ein Verbrennungsmotor oder ein Elektromotor ausgebildet sein. Ausserdem kann die Antriebsanordnung 20 ein Hauptgetriebe 24 aufweisen, welches die erste und zweite Kupplung umfassen kann. Die Antriebsanordnung 20 kann aber auch nur die erste und zweite Kupplung K1, K2 und kein Hauptgetriebe 24 umfassen.

Die Arbeitsmaschine umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Die Antriebsanordnung 20 oder die Arbeitsmaschine 10 kann ausserdem ein erstes Differential 30, also insbesondere ein Vorderachsdifferential, umfassen. Die erste Fahrzeugachse 26 kann mit dem ersten Differential 30 verbunden sein, insbesondere antreibbar verbunden sein. Die Antriebsanordnung 20 oder die Arbeitsmaschine 10 kann ausserdem ein zweites Differential 32, also insbesondere ein Hinterachsdifferential, umfassen. Die zweite Fahrzeugachse 28 kann mit dem zweiten Differential 32 verbunden sein, insbesondere antreibbar verbunden sein.

Mit dem Hauptgetriebe 24 und/oder der ersten und/oder zweiten Kupplung K1, K2 kann eine Drehbewegung und/oder Kraft und/oder ein Drehmoment des Hauptantriebselements 22, insbesondere mit unterschiedlichen Gangstufen, auf die Ausgangswelle 102, insbesondere die erste Ausgangswelle übertragbar sein. Die Drehbewegung und/oder die Kraft und/oder das Drehmoment des Hauptantriebselements 22 kann über die Ausgangswelle 102, insbesondere die erste Ausgangswelle, auf die erste und/oder zweite Fahrzeugachse 26, 28 übertragbar sein. Die erste und/oder zweite Fahrzeugachse 26, 28 wandeln eine Drehbewegung und/oder Kraft und/oder ein Drehmoment des Hauptantriebselements 22 in eine Drehbewegung und/oder Kraft und/oder ein Drehmoment eines oder mehrerer Bodeneingriffsmittel 36, beispielsweise Räder oder Reifen, und somit in einen Vorschub der Arbeitsmaschine 10 um. Die Arbeitsmaschine 10, insbesondere die Antriebsanordnung 20, kann eines oder mehrere Bodeneingriffsmittel 36 umfassen, hier in Form von Reifen oder Rädern 38, 40 dargestellt, welche mit einem Untergrund 12 bzw. Boden zur Übertragung von Antriebskräften in Eingriff stehen und/oder durch die sich die Arbeitsmaschine 10 auf dem Untergrund 12 abstützt. Die Antriebsanordnung 20 ist zum mechanischen Antrieb des Fahrantriebs 100, insbesondere der Ausgangswelle 102, und/oder eines ersten Leistungsausgangs 50 ausgebildet. Der erste Leistungsausgang 50 kann als Zapfwelleneinheit ausgebildet sein. Die Zapfwelleneinheit kann ein Zapfwellengetriebe und/oder eine Zapfwelle umfassen. Die Zapfwelleneinheit, insbesondere das Zapfwellengetriebe, kann antriebsseitig mit dem Hauptantriebselement 22, insbesondere über eine zweite Ausgangswelle verbunden sein. Ausserdem kann die Zapfwelleneinheit, insbesondere das Zapfwellengetriebe, abtriebsseitig mit der Zapfwelle verbindbar oder verbunden sein. Mit dem ersten Leistungsausgang 50 kann ein Arbeitsgerät (nicht gezeigt) antreibbar sein, das über eine Schnittstelle 34 (z.B. Dreipunktschnittstelle) an der Arbeitsmaschine 10 anbringbar ist.

Die Arbeitsmaschine 10 kann ausserdem ein Fahrgestell 46 aufweisen. Das Fahrgestell 46 kann insbesondere von den an der ersten und/oder zweiten Fahrzeugachse 26, 28 aufgehängten Reifen 38, 40 getragen werden. Im Speziellen sind ein Paar erste Räder 38 an der ersten Fahrzeugachse 26 und ein Paar zweite Räder 40 an der zweiten Fahrzeugachse 28 angeordnet, insbesondere mit diesen drehbar verbunden. Dabei können die Radien der Rädern 38, 40 voneinander abweichen, insbesondere kann der Radius der zwei ersten Räder 38 kleiner als der Radius der zwei zweiten Räder 40 sein. Alternativ könnten die Bodeneingriffsmittel 36 auch als Raupen ausgebildet und angeordnet sein.

Die Arbeitsmaschine 10, insbesondere die Antriebsanordnung 20, kann ausserdem eine Steuereinheit 42 und/oder eine Ein- und Ausgabeeinheit 44 umfassen. Die Steuereinheit 42 kann unmittelbar mit der in einer Kabine 48 der Arbeitsmaschine 10 angeordneten Ein- und Ausgabeeinheit 44 in Verbindung stehen. Mit der Ein- und Ausgabeeinheit 44 können von einer Bedienperson eingegebene Daten an die Steuereinheit 42 übertragen oder von dieser empfangen und ausgegeben werden. Die Arbeitsmaschine 10, insbesondere alternativ die Antriebsanordnung 20, kann eine Steuereinheit 42 umfassen. Die Steuereinheit 42 ist mit dem Hauptantriebselement und/oder der ersten und/oder zweiten Kupplung K1, K2 signalverbunden und/oder wirkend gekoppelt und/oder signalübertragend und/oder datenleitend verbunden. Die Steuereinheit 42 ist konfiguriert, die Drehzahl und/oder das Drehmoment der Antriebsanordnung 20, insbesondere des Hauptantriebselements 22, einzustellen und/oder zu verstellen. Die Arbeitsmaschine 10, insbesondere die Antriebsanordnung 20, kann einen Energiespeicher 18, hier beispielsweise eine Batterie (Akkumulator) umfassen. Der Energiespeicher 18 kann elektrisch mit der Antriebsanordnung 20, insbesondere dem Hauptantriebselement 22 verbunden sein. Die Steuereinheit 42 kann konfiguriert sein, eine vorgebbare Drehzahl und/oder ein vorgebbares Drehmoment der Antriebsanordnung 20, insbesondere des Hauptantriebselements 22, einzustellen und/oder zu verstellen. Die Steuereinheit 42 kann aber auch mit dem Energiespeicher 18 und/oder einer Leistungselektronik 52 der Arbeitsmaschine 10, insbesondere alternativ der Antriebsanordnung 20, und/oder Sensoren der Antriebsanordnung 20, insbesondere alternativ der Arbeitsmaschine 10, signalverbunden und/oder wirkend gekoppelt und/oder signalübertragend und/oder datenleitend verbunden sein. Die Steuereinheit 42 kann konfiguriert sein, die Antriebsanordnung 20 und/oder die Arbeitsmaschine 10 einzustellen und/oder zu verstellen, bevorzugt die Drehzahl und/oder das Drehmoment des ersten Leistungsausgangs 50 und/oder des Fahrantriebs 100, insbesondere der Ausgangswelle 102, einzustellen und/oder zu verstellen. Der Energiespeicher 18 versorgt die elektrisch angetriebenen Elemente der Antriebsanordnung 20, insbesondere das Hauptantriebselement 22 mit Strömen bzw. Spannungen geeigneter Frequenz und Amplituden, um gewünschte Ausgangsdrehzahlen oder -Drehmomente für den Fahrantrieb 100 und/oder den ersten Leistungsausgang 50 bereitzustellen.

Figur 2 zeigt eine schematische Darstellung eines ersten Ausführungsbeispiels der erfindungsgemässen Antriebsanordnung 20. Die in Figur 2 gezeigte Antriebsanordnung 20 entspricht im Wesentlichen dem in Figur 1 gezeigten Antriebsanordnung 20, sodass im Folgenden lediglich auf Details und/oder Unterschiede eingegangen wird. Die Arbeitsmaschine 10 kann die Antriebsanordnung 20, wie in Figur 2 dargestellt, umfassen.

Die Antriebsanordnung 20 umfasst ein Hauptantriebselement 22, eine erste und zweite Kupplung K1, K2 und einen Fahrantrieb 100, insbesondere eine Ausgangswelle 102. Die Antriebsanordnung 20 kann aber auch weitere Kupplungen $K_{n+1}$, $K_{m+1}$ umfassen.

Das Hauptantriebselement 22 ist mit der ersten und zweiten Kupplung K1, K2 verbunden. Die erste und/oder zweite Kupplung K1, K2 kann mit dem Fahrantrieb 100, insbesondere der Ausgangswelle 102 verbunden sein. Alternativ oder zusätzlich kann der Fahrantrieb aber auch ein weiteres Getriebe, insbesondere ein Lastschaltgetriebe und/oder ein Mehrstufengetriebe, umfassen, wobei die Ausgangswelle mit dem weiteren Getriebe mechanisch verbunden sein kann (nicht dargestellt). Das weitere Getriebe kann eine weitere Ausgangswelle umfassen und die weitere Ausgangswelle kann die Fahrzeugachsen antreiben.

Eine mit dem Hauptantriebselement 22 erzeugbare Rotationsbewegung und/oder ein mit dem Hauptantriebselement 22 erzeugbares Drehmoment kann, insbesondere mit einer oder über eine Abtriebswelle des Hauptantriebselements 22, über eine erste oder mit einer ersten Welle W1 in das Hauptgetriebe 24 oder die erste und/oder zweite Kupplung K1, K2 einleitbar sein. Das Hauptantriebselement 22 kann direkt mit der ersten Welle W1 oder der ersten und/oder zweiten Kupplung K1, K2 verbunden sein oder mit der oder über die Abtriebswelle mit der ersten Welle W1 oder der ersten und/oder zweiten Kupplung K1, K2 verbunden sein. Das Hauptantriebselement 22 kann aber auch über eine erste Übersetzungsstufe (nicht gezeigt) oder ein erstes Getriebe (nicht gezeigt) mit der ersten Welle W1 oder direkt mit der ersten Kupplung K1 verbunden sein. Alternativ und zusätzlich kann das Hauptantriebselement 22 aber auch über eine zweite Übersetzungsstufe (nicht gezeigt) oder ein zweites Getriebe (nicht gezeigt) mit der zweiten Kupplung K2 verbunden sein. Der Fahrantrieb 100, insbesondere die Ausgangswelle 102, ist durch die oder mit der Rotationsbewegung und/oder das Drehmoment des Hauptantriebselements 22 antreibbar.

Die erste Kupplung K1, insbesondere eine Abtriebsseite der ersten Kupplung K1, kann mit dem Fahrantrieb 100, bevorzugt der Ausgangswelle 102 verbunden sein. Vorliegend ist die erste Kupplung K1 über eine oder durch eine dritte Übersetzungsstufe 104 mit dem Fahrantrieb 100 verbunden. Zusätzlich kann die zweite Kupplung K2, insbesondere eine Abtriebsseite der zweiten Kupplung K2, mit dem Fahrantrieb 100, bevorzugt der Ausgangswelle 102 verbunden sein. Vorliegend ist die zweite Kupplung über eine oder durch eine vierte Übersetzungsstufe 106 mit dem Fahrantrieb 100 verbunden.

Die weiteren Kupplungen $K_{n+1}$, $K_{m+1}$ können über weitere Übersetzungsstufen 108, 110 oder weitere Getriebe mit dem Fahrantrieb 100, bevorzugt der Ausgangswelle 102 verbunden sein.

Die Antriebsanordnung 20 ist derart betreibbar, dass:

i. Ein Solldrehmomentverlaufs der Antriebsanordnung 20, insbesondere des Fahrantriebs 100, besonders bevorzugt der Ausgangswelle 102 ermittelbar ist, und

ii. ein Schlupfpunkt an der ersten Kupplung K1 ermittelbar ist, und

iii. Die Richtung der Relativdrehzahl der ersten und zweiten Kupplung K1, K2 einstellbar und/oder verstellbar ist, wobei die Drehzahl des Hauptantriebselements 22 eingestellt und/oder verstellt wird, bis die Richtung der Relativdrehzahl der ersten und zweiten Kupplung K1, K2 gleich oder identisch ist, und

iv. das Drehmoment von der ersten Kupplung K1 auf die zweite Kupplung K2 übertragbar ist, wobei insbesondere bei der Übertragung das Öffnen der ersten Kupplung K1 in Abhängigkeit von einem Öffnungsverlauf und das Schliessen der zweiten Kupplung K2 in Abhängigkeit vom Öffnungsverlauf der ersten Kupplung K1 erfolgt, wobei insbesondere das Drehmoment der Antriebsanordnung, bevorzugt des Fahrantriebs, besonders bevorzugt der Ausgangswelle, dem Solldrehmomentverlaufs folgt, und

v. die zweite Kupplung K2 synchronisierbar ist, indem die Drehzahl des Hauptantriebselements 22 eingestellt und/oder verstellt wird.

Die erste und zweite Kupplung K1, K2 können auch durch die weiteren Kupplung $K_{n+1}$ und die weitere Kupplung $K_{m+1}$ ersetzt werden.

Mit anderen Worten, die Steuereinheit 42 kann konfiguriert sein:

• Ein Solldrehmomentverlaufs der Antriebsanordnung 20, bevorzugt des Fahrantriebs 100, besonders bevorzugt der Ausgangswelle 102 zu ermitteln, insbesondere in Abhängigkeit von einem Schaltvorgang der Antriebsanordnung 20, und

• Einen Schlupfpunkt an der ersten Kupplung K1 zu ermitteln, und

• Die Richtung oder das Vorzeichens der Relativdrehzahl der ersten und zweiten Kupplung K1, K2 einzustellen und/oder zu verstellen, wobei die Steuereinheit 42 weiter konfiguriert ist, die Drehzahl des Hauptantriebselements 22 einzustellen und/oder zu verstellen, bis die Richtung oder das Vorzeichen der Relativdrehzahl der ersten und zweiten Kupplung K1, K2 gleich oder identisch ist, und

• das Drehmoment von der ersten Kupplung K1 auf die zweite Kupplung K2 zu übertragen, wobei insbesondere bei der Übertragung das Öffnen der ersten Kupplung K1 in Abhängigkeit von einem Öffnungsverlauf und das Schliessen der zweiten Kupplung K2 in Abhängigkeit vom Öffnungsverlauf der ersten Kupplung K1 erfolgt, und

• die zweite Kupplung K2 zu synchronisieren, indem die Drehzahl des Hauptantriebselements eingestellt und/oder verstellt wird.

Figur 3 zeigt ein schematisches Flussdiagramm des erfindungsgemässen Verfahrens. Die Arbeitsmaschine 10 oder die Antriebsanordnung 20, insbesondere in den Figuren 1 oder 2, können gemäss dem in Figur 3 gezeigte Ablauf des Verfahrens betreibbar sein. Das Verfahren umfasst die folgenden Schritte:

Nach dem Start im Schritt 300 folgt der Schritt 302, in dem, das Ermitteln eines Solldrehmomentverlaufs der Antriebsanordnung 20, bevorzugt des Fahrantriebs 100, besonders bevorzugt der Ausgangswelle 102 erfolgt. Im Speziellen kann das Ermitteln des Solldrehmomentverlaufs die folgenden Unterschritte umfassen:

- Ermitteln eines ersten Drehmoments am Fahrantrieb 100, insbesondere der Ausgangswelle 102, und/oder
- Optional das Ermitteln eines zweiten Drehmoments der Antriebsanordnung 20 und Ermitteln des ersten Drehmoments in Abhängigkeit vom oder mit dem zweiten Drehmoment, und/oder
- Ermitteln des Solldrehmomentverlaufs in Abhängigkeit vom oder mit dem ersten oder zweiten Drehmoment.

In Schritt 304 wird der Schlupfpunkt an der ersten Kupplung K1 ermittelt. Das Ermitteln des Schlupfpunktes der ersten Kupplung K1 kann die folgenden Schritte umfassen:

- Öffnen der ersten Kupplung K1, bis die abtriebsseitige Drehzahl des Hauptantriebselements und die abtriebsseitige Drehzahl der ersten Kupplung K1 verschieden sind.

Im Speziellen kann das Ermitteln des Schlupfpunktes der ersten Kupplung die folgenden Schritte umfassen:

- Ermitteln der abtriebsseitigen Drehzahl des Hauptantriebselements 22 und der abtriebsseitigen Drehzahl der ersten Kupplung K1, und
- Vergleich der abtriebsseitigen Drehzahl des Hauptantriebselements 22 mit der abtriebsseitigen Drehzahl der ersten Kupplung K1, und
- Verringern der Drehmomentkapazität der ersten Kupplung K1, bevorzugt Verringern einer Stromstärke eines ersten Ventils V1 (siehe Fig. 2) der ersten Kupplung K1, wenn die abtriebsseitige Drehzahl des Hauptantriebselements 22 und die abtriebsseitige Drehzahl der ersten Kupplung K1 gleich oder identisch sind, und
- Wiederholen der vorherigen Schritte, bis die abtriebsseitige Drehzahl des Hauptantriebselements 22 und die abtriebsseitige Drehzahl der ersten Kupplung K1 verschieden sind.

In einem weiteren Schritt 306 erfolgt das Einstellen und/oder Verstellen der Richtung oder des Vorzeichens der Relativdrehzahl der ersten und zweiten Kupplung K1, K2, wobei die Drehzahl des Hauptantriebselements 22 eingestellt und/oder verstellt wird, bis die Richtung der Relativdrehzahl der ersten und zweiten Kupplung K1, K2 gleich ist. Das Einstellen und/oder Verstellen der Richtung oder des Vorzeichens der Relativdrehzahl der ersten und zweiten Kupplung K1, K2 kann in Abhängigkeit von einem Betriebsmodus erfolgen.

In Schritt 308 wird das Drehmoment von der ersten Kupplung auf die zweite Kupplung übertragen, wobei das Drehmoment der Antriebsanordnung 20, bevorzugt des Fahrantriebs, besonders bevorzugt der Ausgangswelle, dem Solldrehmomentverlaufs folgt. Im Speziellen kann das Übertragen des Drehmoments von der ersten Kupplung auf die zweite Kupplung die folgenden Schritte umfasst:

- Öffnen der ersten Kupplung in Abhängigkeit von einem Öffnungsverlauf, und
- Schliessen der zweiten Kupplung in Abhängigkeit vom Öffnungsverlauf der ersten Kupplung.

Das Öffnen der ersten Kupplung K1 kann das Verringern oder Senken der Drehmomentkapazität, bevorzugt das Verringern oder Senken der Stromstärke des ersten Ventils V1 der ersten Kupplung K1 umfassen. Das Schliessen der zweiten Kupplung K2 kann das Erhöhen der Drehmomentkapazität, bevorzugt das Erhöhen der Stromstärke eines zweiten Ventils V2 der zweiten Kupplung K2 umfassen.
Optional kann Schritt 306 oder aber nach Schritt 306 und vor Schritt 308, die folgenden Schritte umfasst:

- Durchführung eines Füllschritts, bei welchem die zweite Kupplung mit einem Fluid befüllt wird, und/oder
- Schliessen der zweiten Kupplung in Abhängigkeit von einem Kalibrierverlauf, insbesondere Erhöhen der Stromstärke des zweiten Ventils der zweiten Kupplung, bis das Drehmoment des Hauptantriebselements vom Drehmoment an der ersten Kupplung verschieden wird.

Optional kann das Verfahren nach Schritt 308 den folgenden Schritt umfassen:

- Durchführung eines Entleerungsschritt, bei welchem die erste Kupplung von einem Fluid entleert wird.

In Schritt 310 erfolgt die Synchronisierung der zweiten Kupplung, indem die Drehzahl des Hauptantriebselements eingestellt und/oder verstellt wird. Die Synchronisierung der zweiten Kupplung kann die folgenden Schritte umfassen:

- Erhöhen der Drehzahl des Hauptantriebselements, wenn die Antriebsanordnung 20 in einem Betriebsmodus "Schub" betrieben wird, oder
- Verringern der Drehzahl des Hauptantriebselements, wenn die Antriebsanordnung 20 in einem Betriebsmodus "Zug" betrieben wird.

Während oder nach Schritt 310, also insbesondere während oder nach der Synchronisierung, können die folgenden Schritte erfolgen, vollständiges Öffnen der ersten Kupplung, und/oder das Entleeren der ersten Kupplung, und/oder das Schliessen der zweiten Kupplung K2.

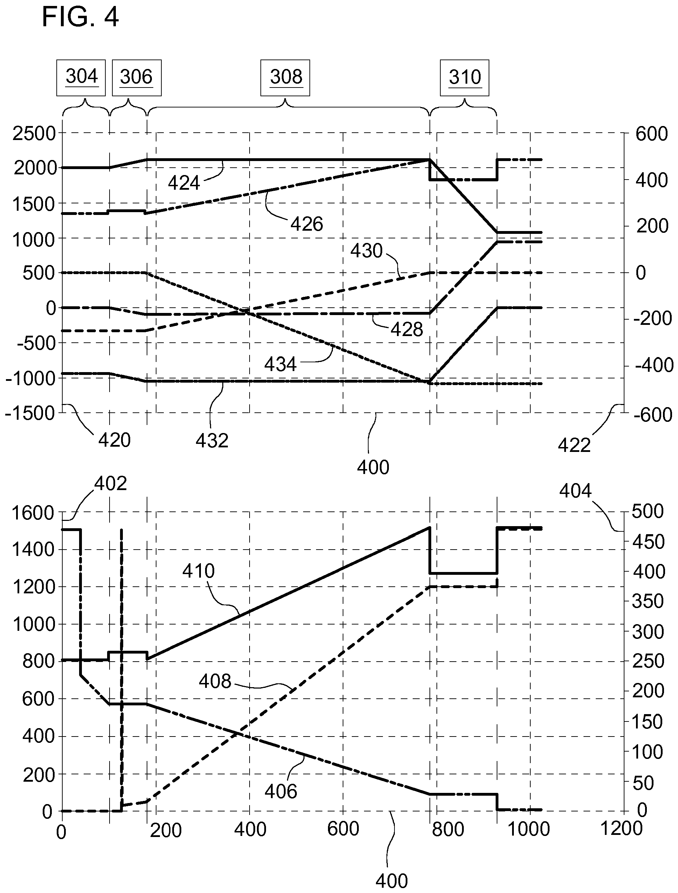

Figur 4 zeigt eine schematische Darstellung eines ersten Ausführungsbeispiels des erfindungsgemässen Verfahrens, insbesondere im Betriebsmodus "Zug" mit "Zug-Hochschalten". Das in Figur 4 gezeigte und im Folgenden beschriebene Verfahren entspricht im Wesentlichen dem in Figur 3 und oben beschriebenen Verfahren, sodass im Folgenden lediglich auf Details und/oder Unterschiede eingegangen wird. Die Arbeitsmaschine 10 oder die Antriebsanordnung 20, insbesondere in den Figuren 1 oder 2, können gemäss dem in Figur 4 gezeigten und im Folgenden beschriebenen Ablauf des Verfahrens betreibbar sein.

Die untere Darstellung, insbesondere das untere Diagramm, zeigt:

An oder auf der Abszisse 400 oder X-Achse ist die Zeit in ms aufgetragen. An oder auf der ersten Ordinate 402 oder Y-Achse ist die Drehmomentkapazität oder die Stromstärke in mA aufgetragen. An oder auf der zweiten Ordinate 404 oder Y-Achse ist das Drehmoment in Nm aufgetragen. Figur 4 zeigt den Verlauf der Drehmomentkapazität bzw. der Stromstärken der ersten und zweiten Kupplung K1, K2 sowie den Verlauf der Drehmomente, der Richtung der Relativdrehzahl und der Drehzahlen der ersten und zweiten Kupplung K1, K2 sowie des Hauptantriebselements 22 in den Verfahrensschritten 304 bis 310 sowie den Schritten nach Verfahrensschritt 310:

- Den Verlauf der Drehmomentkapazität bzw. der Stromstärke 406 der ersten oder zu öffnenden Kupplung K1, und
- Den Verlauf der Drehmomentkapazität bzw. der Stromstärke 408 der zweiten oder zu schliessenden Kupplung K2, und
- Den Verlauf des Drehmoments 410, 426 des Hauptantriebselements 22.

Die obere Darstellung, insbesondere das obere Diagramm, zeigt:

An oder auf der Abszisse 400 oder X-Achse ist die Zeit in ms aufgetragen. An oder auf der ersten Ordinate 420 oder Y-Achse ist die Drehzahl in Umdrehungen pro Minute aufgetragen. An oder auf der zweiten Ordinate 422 oder Y-Achse ist das Drehmoment in Nm aufgetragen. Figur 4 zeigt weiter:

- Den Verlauf der Drehzahl 424 des Hauptantriebselements 22, und
- Den Verlauf des Drehmoments 410, 426 des Hauptantriebselements 22, und
- Den Verlauf der Richtung der Relativdrehzahl 428 in Umdrehungen pro Minute der ersten Kupplung K1, und
- Den Verlauf des Drehmoments 430 der ersten Kupplung K1, und
- Den Verlauf der Richtung der Relativdrehzahl 432 in Umdrehungen pro Minute der zweiten Kupplung K2, und
- Den Verlauf des Drehmoments 434 der zweiten Kupplung K2.

Das Verfahren kann dabei wie folgt betrieben oder durchgeführt werden. In Verfahrensschritt 304 wird die Drehmomentkapazität der ersten Kupplung K1, insbesondere die Stromstärke des ersten Ventils V1 der ersten Kupplung K1, sehr schnell von der max. Drehmomentkapazität bzw. vom Maximalstrom in einen Bereich geregelt, in dem die erste Kupplung K1 das aufgebrachte Drehmoment noch vollständig schlupffrei überträgt. Von da an wird die Drehmomentkapazität bzw. die Stromstärke weiter reduziert, bis die erste Kupplung K1 den Schlupfpunkt erreicht, insbesondere zu rutschen beginnt. Für die Stromstärke am ersten Ventil ergibt sich somit der entsprechende Drehmomentwert am Schlupfpunkt, insbesondere zu Beginn des Kupplungsschlupfes. Sobald der Schlupf der zu ersten Kupplung K1 erkannt wird, wird die Drehzahl des Hauptantriebselements 22 in Schritt 306 erhöht, sodass die erste und zweite Kupplung K1, K2 die gleiche Richtung der Relativdrehzahl aufweisen, also insbesondere die Relativgeschwindigkeiten beider Kupplungen K1, K2 die gleiche Richtung (gleiche Polarität) haben und daher nicht gegeneinander arbeiten. Anzumerken ist, dass, da die erste Kupplung K1 mit dem vollen Drehmoment rutscht und die zweite Kupplung K2 weiterhin kein Drehmoment überträgt, wirkt sich eine Änderung der Drehzahl des Hauptantriebselements 22 nicht auf das Drehmoment des Fahrantriebs 100, insbesondere der Ausgangswelle 102 aus. Zusätzlich wird in Schritt 306 die erste Kupplung mit einem "Füllimpuls" vorgefüllt und für den Anlegepunkt vorbereitet. Sobald die Drehzahleinstellung des Hauptantriebselements 22 abgeschlossen ist, kann die Drehmomentübertragung der Kupplungen in Schritt 308 beginnen. In Schritt 308 wird die erste Kupplung K1 in Abhängigkeit von einem Öffnungsverlauf geöffnet und die zweite Kupplung K2 wird in Abhängigkeit vom Öffnungsverlauf der ersten Kupplung K1 geschlossen.

Im Speziellen kann dabei die Drehmomentkapazität der ersten und zweiten Kupplung derart eingestellt und/oder verstellt werden, dass das Drehmoment am Fahrantrieb 100, insbesondere der Ausgangswelle 102, dem Solldrehmomentverlauf folgt. Bevorzugt kann die Steuereinheit konfiguriert sein, die Stromstärke der Ventile V1 und V2 anzusteuern und/oder einzustellen und/oder zu verstellen, sodass das Drehmoment am Fahrantrieb 100, insbesondere der Ausgangswelle 102, dem Solldrehmomentverlauf folgt. Sobald die zweite Kupplung K2 das gesamte Drehmoment überträgt, wird in Schritt 310 die Drehmomentkapazität der ersten und zweiten Kupplung K1, K2, bevorzugt die Stromstärke des ersten und zweiten Ventils V1, V2 konstant gehalten, während die Synchronisierung der zweiten Kupplung K2 mit dem Hauptantriebselements 22 auf das Niveau des neuen Übersetzungsverhältnisses erfolgt. Sobald diese Synchronisierung abgeschlossen ist, wird die Drehmomentkapazität der ersten Kupplung K1, insbesondere die Stromstärke des zweiten Ventils, auf 0 (Null) eingestellt und/oder verstellt. Ausserdem wird die Drehmomentkapazität der zweiten Kupplung K2, insbesondere die Stromstärke des zweiten Ventils, auf ihre maximalen Werte eingestellt und/oder verstellt, wodurch der Schaltvorgang abgeschlossen ist.

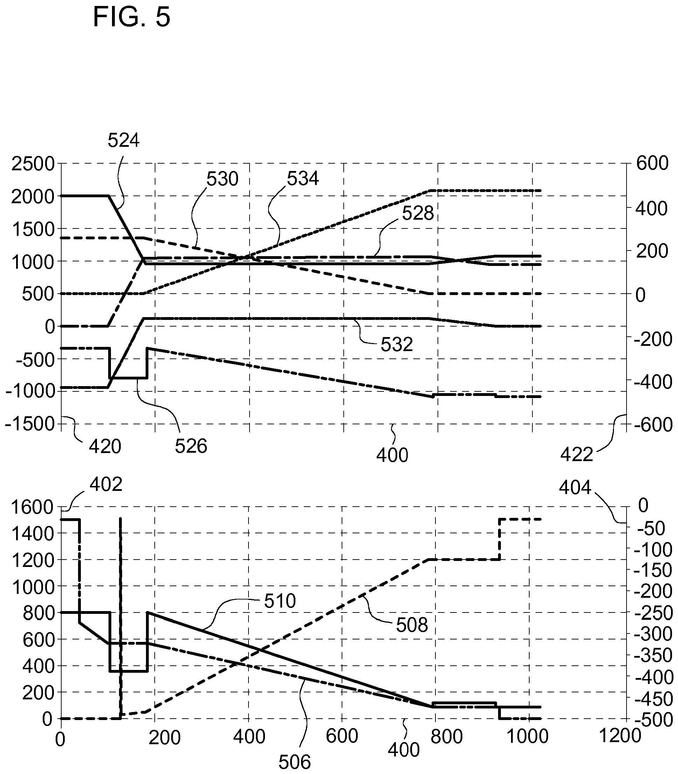

Figur 5 zeigt eine schematische Darstellung eines zweiten Ausführungsbeispiels des erfindungsgemässen Verfahrens, insbesondere im Betriebsmodus "Schub" mit "Schub-Hochschalten". Das in Figur 5 gezeigte und im Folgenden beschriebene Verfahren entspricht im Wesentlichen dem in den Figuren 3 und 4 gezeigten und oben beschriebenen Verfahren, sodass im Folgenden lediglich auf Details und/oder Unterschiede eingegangen wird. Die Arbeitsmaschine 10 oder die Antriebsanordnung 20, insbesondere in den Figuren 1 oder 2, können gemäss dem in Figur 5 gezeigten und im Folgenden beschriebenen Ablauf des Verfahrens betreibbar sein. Die untere Darstellung, insbesondere das untere Diagramm, zeigt:

An oder auf der Abszisse 400 oder X-Achse ist die Zeit in ms aufgetragen. An oder auf der ersten Ordinate 402 oder Y-Achse ist die Drehmomentkapazität oder die Stromstärke in mA aufgetragen. An oder auf der zweiten Ordinate 404 oder Y-Achse ist das Drehmoment in Nm aufgetragen. Figur 5 zeigt den Verlauf der Drehmomentkapazität bzw. der Stromstärken der ersten und zweiten Kupplung K1, K2 sowie den Verlauf der Drehmomente, der Richtung der Relativdrehzahl und der Drehzahlen der ersten und zweiten Kupplung K1, K2 sowie des Hauptantriebselements 22 im Betriebsmodus "Schub" mit "Schub-Hochschalten" mit den Verfahrensschritten 304 bis 310 sowie den Schritten nach Verfahrensschritt 310:

- Den Verlauf der Drehmomentkapazität bzw. der Stromstärke 506 der ersten oder zu öffnenden Kupplung K1, und
- Den Verlauf der Drehmomentkapazität bzw. der Stromstärke 508 der zweiten oder zu schliessenden Kupplung K2, und
- Den Verlauf des Drehmoments 510, 526 des Hauptantriebselements 22.

Die obere Darstellung, insbesondere das obere Diagramm, zeigt:
An oder auf der Abszisse 400 oder X-Achse ist die Zeit in ms aufgetragen. An oder auf der ersten Ordinate 420 oder Y-Achse ist die Drehzahl in Umdrehungen pro Minute aufgetragen. An oder auf der zweiten Ordinate 422 oder Y-Achse ist das Drehmoment in Nm aufgetragen. Figur 5 zeigt weiter:

- Den Verlauf der Drehzahl 524 des Hauptantriebselements 22, und
- Den Verlauf des Drehmoments 510, 526 des Hauptantriebselements 22, und
- Den Verlauf der Richtung der Relativdrehzahl 528 in Umdrehungen pro Minute der ersten Kupplung K1, und
- Den Verlauf des Drehmoments 530 der ersten Kupplung K1, und
- Den Verlauf der Richtung der Relativdrehzahl 532 in Umdrehungen pro Minute der zweiten Kupplung K2, und
- Den Verlauf des Drehmoments 534 der zweiten Kupplung K2.

Im Gegensatz zum Betriebsmodus "Zug" mit "Zug-Hochschalten" wird im Betriebsmodus "Schub" mit "Schub-Hochschalten" die Drehzahl des Hauptantriebselements 22 reduziert, nachdem der Schlupfpunkt erkannt wurde. Allerdings kann die Antriebsanordnung 20 oder die Arbeitsmaschine 10, wie im Betriebsmodus "Zug" mit "Zug-Hochschalten", im Betriebsmodus "Schub" mit "Schub-Hochschalten" beschleunigen.

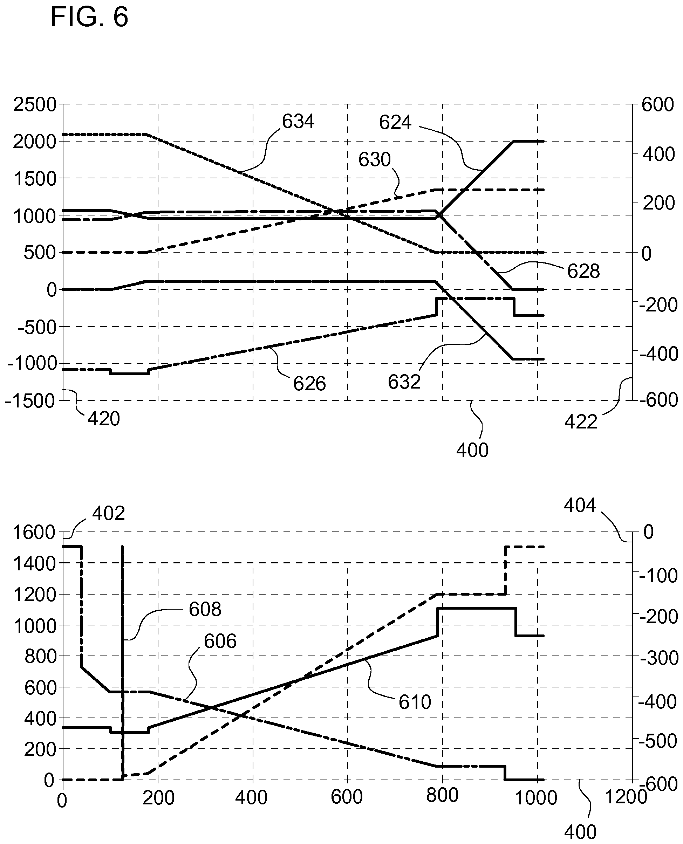

Figur 6 zeigt eine schematische Darstellung eines dritten Ausführungsbeispiels des erfindungsgemässen Verfahrens, insbesondere im Betriebsmodus "Zug" mit "Zug-Herunterschalten". Das in Figur 6 gezeigte und im Folgenden beschriebene Verfahren entspricht im Wesentlichen dem in den Figuren 3 bis 5 gezeigten und oben beschriebenen Verfahren, sodass im Folgenden lediglich auf Details und/oder Unterschiede eingegangen wird. Die Arbeitsmaschine 10 oder die Antriebsanordnung 20, insbesondere in den Figuren 1 oder 2, können gemäss dem in Figur 6 gezeigten und im Folgenden beschriebenen Ablauf des Verfahrens betreibbar sein. Die untere Darstellung, insbesondere das untere Diagramm, zeigt:

An oder auf der Abszisse 400 oder X-Achse ist die Zeit in ms aufgetragen. An oder auf der ersten Ordinate 402 oder Y-Achse ist die Drehmomentkapazität oder die Stromstärke in mA aufgetragen. An oder auf der zweiten Ordinate 404 oder Y-Achse ist das Drehmoment in Nm aufgetragen. Figur 6 zeigt den Verlauf der Drehmomentkapazität bzw. der Stromstärken der ersten und zweiten Kupplung K1, K2 sowie den Verlauf der Drehmomente, der Richtung der Relativdrehzahl und der Drehzahlen der ersten und zweiten Kupplung K1, K2 sowie des Hauptantriebselements 22 im Betriebsmodus "Zug" mit "Zug-Herunterschalten" mit den Verfahrensschritten 304 bis 310 sowie den Schritten nach Verfahrensschritt 310:

- Den Verlauf der Drehmomentkapazität bzw. der Stromstärke 606 der ersten oder zu öffnenden Kupplung K1, und
- Den Verlauf der Drehmomentkapazität bzw. der Stromstärke 608 der zweiten oder zu schliessenden Kupplung K2, und

- Den Verlauf des Drehmoments 610, 626 des Hauptantriebselements 22.

Die obere Darstellung, insbesondere das obere Diagramm, zeigt:
An oder auf der Abszisse 400 oder X-Achse ist die Zeit in ms aufgetragen. An oder auf der ersten Ordinate 420 oder Y-Achse ist die Drehzahl in Umdrehungen pro Minute aufgetragen. An oder auf der zweiten Ordinate 422 oder Y-Achse ist das Drehmoment in Nm aufgetragen. Figur 6 zeigt weiter:

- Den Verlauf der Drehzahl 624 des Hauptantriebselements 22, und
- Den Verlauf des Drehmoments 610, 626 des Hauptantriebselements 22, und
- Den Verlauf der Richtung der Relativdrehzahl 628 in Umdrehungen pro Minute der ersten Kupplung K1, und
- Den Verlauf des Drehmoments 630 der ersten Kupplung K1, und
- Den Verlauf der Richtung der Relativdrehzahl 632 in Umdrehungen pro Minute der zweiten Kupplung K2, und
- Den Verlauf des Drehmoments 634 der zweiten Kupplung K2.

Im Gegensatz zum Betriebsmodus "Zug" mit "Zug-Hochschalten" ist im Betriebsmodus "Zug" mit "Zug-Herunterschalten" die Änderung der Drehzahl des Hauptantriebselements 22 am Beginn des Schaltvorgangs, also vor der Übertragung des Drehmoments von der ersten auf die zweite Kupplung K1, K2, kleiner als am Ende des Schaltvorgangs, also nach der Übertragung des Drehmoments von der ersten auf die zweite Kupplung K1, K2.

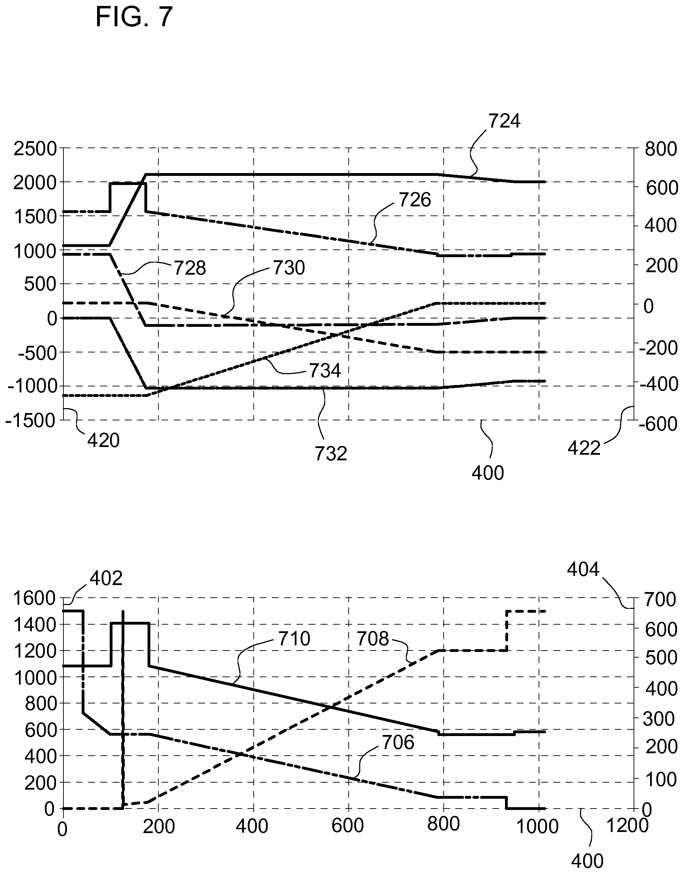

Figur 7 zeigt eine schematische Darstellung eines vierten Ausführungsbeispiels des erfindungsgemässen Verfahrens, insbesondere im Betriebsmodus "Schub" mit "Schub-Herunterschalten". Das in Figur 7 gezeigte und im Folgenden beschriebene Verfahren entspricht im Wesentlichen dem in den Figuren 3 bis 6 gezeigten und oben beschriebenen Verfahren, sodass im Folgenden lediglich auf Details und/oder Unterschiede eingegangen wird. Die Arbeitsmaschine 10 oder die Antriebsanordnung 20, insbesondere in den Figuren 1 oder 2, können gemäss dem in Figur 7 gezeigten und im Folgenden beschriebenen Ablauf des Verfahrens betreibbar sein. Die untere Darstellung, insbesondere das untere Diagramm, zeigt:
An oder auf der Abszisse 400 oder X-Achse ist die Zeit in ms aufgetragen. An oder auf der ersten Ordinate 402 oder Y-Achse ist die Drehmomentkapazität oder die Stromstärke in mA aufgetragen. An oder auf der zweiten Ordinate 404 oder Y-Achse ist das Drehmoment in Nm aufgetragen. Figur 7 zeigt den Verlauf der Drehmomentkapazität bzw. der Stromstärken der ersten und zweiten Kupplung K1, K2 sowie den Verlauf der Drehmomente, der Richtung der Relativdrehzahl und der Drehzahlen der ersten und zweiten Kupplung K1, K2 sowie des Hauptantriebselements 22 im Betriebsmodus "Schub" mit "Schub-Herunterschalten" mit den Verfahrensschritten 304 bis 310 sowie den Schritten nach Verfahrensschritt 310:

- Den Verlauf der Drehmomentkapazität bzw. der Stromstärke 706 der ersten oder zu öffnenden Kupplung K1, und
- Den Verlauf der Drehmomentkapazität bzw. der Stromstärke 708 der zweiten oder zu schliessenden Kupplung K2, und
- Den Verlauf des Drehmoments 710, 726 des Hauptantriebselements 22.

Die obere Darstellung, insbesondere das obere Diagramm, zeigt:
An oder auf der Abszisse 400 oder X-Achse ist die Zeit in ms aufgetragen. An oder auf der ersten Ordinate 420 oder Y-Achse ist die Drehzahl in Umdrehungen pro Minute aufgetragen. An oder auf der zweiten Ordinate 422 oder Y-Achse ist das Drehmoment in Nm aufgetragen. Figur 7 zeigt weiter:

- Den Verlauf der Drehzahl 724 des Hauptantriebselements 22, und
- Den Verlauf des Drehmoments 710, 726 des Hauptantriebselements 22, und
- Den Verlauf der Richtung der Relativdrehzahl 728 in Umdrehungen pro Minute der ersten Kupplung K1, und
- Den Verlauf des Drehmoments 730 der ersten Kupplung K1, und
- Den Verlauf der Richtung der Relativdrehzahl 732 in Umdrehungen pro Minute der zweiten Kupplung K2, und
- Den Verlauf des Drehmoments 734 der zweiten Kupplung K2.

Im Gegensatz zum Betriebsmodus "Schub" mit "Schub-Hochschalten" ist im Betriebsmodus "Schub" mit "Schub-Herunterschalten" die Änderung der Drehzahl des Hauptantriebselements 22 am Beginn des Schaltvorgangs, also vor der Übertragung des Drehmoments von der ersten auf die zweite Kupplung K1, K2, grösser als am Ende des Schaltvorgangs, also nach der Übertragung des Drehmoments von der ersten auf die zweite Kupplung K1, K2.

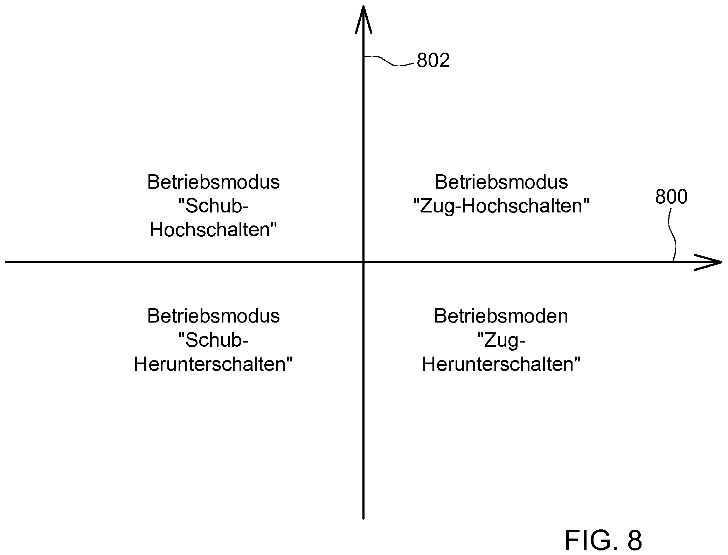

Figur 8 zeigt eine schematische Darstellung der Betriebsmodi. Die in Figur 8 gezeigten und im Folgenden beschriebene Betriebsmodi entsprechen im Wesentlichen dem in den Figuren 3 bis 7 gezeigten und oben beschriebenen Betriebsmodi, sodass im Folgenden lediglich auf Details und/oder Unterschiede eingegangen wird. Die Arbeitsmaschine 10 oder die Antriebsanordnung 20, insbesondere in den Figuren 1 oder 2, können gemäss den in Figur 8 gezeigten und im Folgenden beschriebenen Betriebsmodi betreibbar sein.

Das erfindungsgemässe Verfahren kann in vier verschiedenen Betriebsmodi betreibbar oder durchführbar sein.

- Betriebsmodus "Zug" mit "Zug-Hochschalten" - beispielsweise Beschleunigung der Antriebsanordnung 20 oder der Arbeitsmaschine 10 gegen Widerstand, z. B. bergauf oder mit erheblichem Rollwiderstand.
- Betriebsmodus "Zug" mit "Zug-Herunterschalten" - beispielsweise können die Antriebsanordnung 20 oder die Arbeitsmaschine 10 gegen Widerstand fahren (z. B. bergauf mit Anhänger) und können beispielsweise die Geschwindigkeit im aktuellen Gang nicht mehr halten und müssen aufgrund der Leistungsbegrenzung herunterschalten.
- Betriebsmodus "Schub" mit "Schub-Hochschalten" - beispielsweise Beschleunigung der Antriebsanordnung 20 oder der Arbeitsmaschine 10 bergab. Die Arbeitsmaschine 10 muss hochschalten, da die Antriebsanordnung 20, insbesondere das Hauptantriebselement 22, eine Geschwindigkeitsbegrenzung erreicht hat. Der Kraftfluss im Antriebsstrang kann sich verzögern.
- Betriebsmodus "Schub" mit "Schub-Herunterschalten" - beispielsweise Verzögerung oder Bremsung der Antriebsanordnung 20 oder der Arbeitsmaschine 10 bergab mit der Verzögerungsleistung der Antriebsanordnung 20 zur Begrenzung der Fahrzeuggeschwindigkeit.

Die 4 Betriebsmodi sind in Figur 8 als zu den vier Quadranten gehörend in einem Diagramm dargestellt werden. An oder auf der Abszisse 800 oder X-Achse ist das Drehmoment in Nm aufgetragen. An oder auf der ersten Ordinate 802 oder Y-Achse ist die Beschleunigung, insbesondere die Beschleunigung der Arbeitsmaschine 10 aufgetragen.

## Patentansprüche

1. Verfahren zum Betreiben einer Antriebsanordnung (20) oder einer Arbeitsmaschine (10), wobei die Antriebsanordnung (20) ein Hauptantriebselement (22), eine erste und zweite Kupplung (K1, K2) und einen Fahrantrieb (100) umfasst, **dadurch gekennzeichnet, dass** das Verfahren die folgenden Schritte umfasst:

   i. Ermitteln eines Solldrehmomentverlaufs der Antriebsanordnung (20), und
   ii. Ermittlung eines Schlupfpunktes an der ersten Kupplung (K1), und
   iii. Einstellen und/oder Verstellen der Richtung der Relativdrehzahl der ersten und zweiten Kupplung (K1, K2), wobei die Drehzahl des Hauptantriebselements (22) eingestellt und/oder verstellt wird, bis die Richtung der Relativdrehzahl der ersten und zweiten Kupplung (K1, K2) gleich ist, und
   iv. Übertragung des Drehmoments von der ersten Kupplung (K1) auf die zweite Kupplung (K2), wobei das Drehmoment der Antriebsanordnung (20) dem Solldrehmomentverlaufs folgt, und
   v. Synchronisierung der zweiten Kupplung (K2), indem die Drehzahl des Hauptantriebselements (22) eingestellt und/oder verstellt wird.

2. Verfahren nach Anspruch 1, wobei das Ermitteln des Solldrehmomentverlaufs die folgenden Schritte umfasst:

   • Ermitteln eines ersten Drehmoments am Fahrantrieb (100) und/oder
   • Ermitteln eines zweiten Drehmoments der Antriebsanordnung (20) und Ermitteln des ersten Drehmoments in Abhängigkeit vom zweiten Drehmoment, und/oder
   • Ermitteln des Solldrehmomentverlaufs in Abhängigkeit vom ersten oder zweiten Drehmoment

3. Verfahren nach Anspruch 1 oder 2, wobei das Ermitteln des Schlupfpunktes der ersten Kupplung (K1) die folgenden Schritte umfasst:

   • Öffnen der ersten Kupplung (K1), bis die abtriebsseitige Drehzahl des Hauptantriebselements (22) und die abtriebsseitige Drehzahl der ersten Kupplung (K1) oder die antriebsseitige Drehzahl der ersten Kupplung (K1) und die abtriebsseitige Drehzahl der ersten Kupplung (K1) verschieden sind.

4. Verfahren nach Anspruch 3, wobei das Ermitteln des Schlupfpunktes der ersten Kupplung (K1) die folgenden Schritte umfasst:

   • Ermitteln der abtriebsseitigen Drehzahl des Hauptantriebselements (22) und der abtriebsseitigen Drehzahl der ersten Kupplung (K1), und
   • Vergleich der abtriebsseitigen Drehzahl des Hauptantriebselements (22) mit der abtriebsseitigen Drehzahl der ersten Kupplung (K1), und

• Verringern der Drehmomentkapazität der ersten Kupplung (K1), wenn die abtriebsseitige Drehzahl des Hauptantriebselements (22) und die abtriebsseitige Drehzahl der ersten Kupplung (K1) identisch sind, bis die abtriebsseitige Drehzahl des Hauptantriebselements (22) und die abtriebsseitige Drehzahl der ersten Kupplung (K1) verschieden sind.

5. Verfahren nach einem der vorangehenden Ansprüche, wobei das Einstellen und/oder Verstellen der Richtung der Relativdrehzahl der ersten und zweiten Kupplung (K1, K2) in Abhängigkeit von einem Betriebsmodus erfolgt.

6. Verfahren nach einem der vorangehenden Ansprüche, wobei das Verfahren die folgenden Schritte umfasst:

• Durchführung eines Füllschritts, bei welchem die zweite Kupplung (K2) mit einem Fluid befüllt wird, und/oder
• Durchführung eines Entleerungsschritt, bei welchem die erste Kupplung (K1) von einem Fluid entleert wird.

7. Verfahren nach einem der vorangehenden Ansprüche, wobei das Verfahren den weiteren Schritt umfasst:

• Schliessen der zweiten Kupplung (K2) in Abhängigkeit von einem Kalibrierverlauf, insbesondere Erhöhen der Stromstärke des zweiten Ventils der zweiten Kupplung (K2), bis das Drehmoment des Hauptantriebselements (22) vom Drehmoment an der ersten Kupplung (K1) verschieden wird.

8. Verfahren nach einem der vorangehenden Ansprüche, wobei das Übertragen des Drehmoments von der ersten Kupplung (K1) auf die zweite Kupplung (K2) die folgenden Schritte umfasst:

• Öffnen der ersten Kupplung (K1) in Abhängigkeit von einem Öffnungsverlauf, und
• Schliessen der zweiten Kupplung (K2) in Abhängigkeit vom Öffnungsverlauf der ersten Kupplung (K1).

9. Verfahren nach einem der vorangehenden Ansprüche, wobei die Synchronisierung der zweiten Kupplung (K2) die folgenden Schritte umfasst:

• Erhöhen der Drehzahl des Hauptantriebselements (22), wenn die Antriebsanordnung (20) in einem Betriebsmodus "Schub" betrieben wird, oder
• Verringern der Drehzahl des Hauptantriebselements (22), wenn die Antriebsanordnung (20) in einem Betriebsmodus "Zug" betrieben wird.

10. Verfahren nach einem der vorangehenden Ansprüche, wobei nach der Synchronisierung die folgenden Schritte erfolgen:

• Vollständiges Öffnen der ersten Kupplung (K1), und/oder
• Entleeren der ersten Kupplung (K1), und/oder
• Schliessen der zweiten Kupplung (K2).

11. Antriebsanordnung zur Durchführung eines Verfahrens, insbesondere eines Verfahrens nach einem der Ansprüche 1 bis 10.

12. Antriebsanordnung nach Anspruch 11, wobei die Antriebsanordnung (20) einen Hauptantriebselement (22), eine erste und zweite Kupplung (K1, K2) und einen Fahrantrieb (100) umfasst, und die Antriebsanordnung (20) derart betreibbar ist, dass:

i. Ein Solldrehmomentverlaufs der Antriebsanordnung (20) ermittelbar ist, und
ii. Ein Schlupfpunkt an der ersten Kupplung (K1) ermittelbar ist, und
iii. Die Richtung der Relativdrehzahl der ersten und zweiten Kupplung (K1, K2) einstellbar und/oder verstellbar ist, wobei die Drehzahl des Hauptantriebselements (22) eingestellt und/oder verstellt wird, bis die Richtung der Relativdrehzahl der ersten und zweiten Kupplung (K1, K2) gleich ist, und
iv. Das Drehmoment von der ersten Kupplung (K1) auf die zweite Kupplung (K2) übertragbar ist, und
v. Die zweite Kupplung (K2) synchronisierbar ist, indem die Drehzahl des Hauptantriebselements (22) eingestellt und/oder verstellt wird.

13. Antriebsanordnung nach Anspruch 11 oder 12, wobei das Hauptantriebselement (22) mit der ersten und zweiten Kupplung (K1, K2) verbunden ist, und die erste und/oder zweite Kupplung (K1, K2) mit dem Fahrantrieb (100) verbunden ist, und eine durch das Hauptantriebselement (22) erzeugbare Rotationsbewegung und/oder ein erzeugbares Drehmoment in die erste und/oder zweite Kupplung (K1, K2) einleitbar ist und durch die Rotationsbewegung und/oder das Drehmoment des Hauptantriebselements (22) wenigstens der Fahrantrieb (100) antreibbar ist.

14. Arbeitsmaschine umfassend eine Antriebsanordnung (20) nach einem der Ansprüche 11 bis 13.

FIG. 1

24

100

22

$K_1, V_1$

$K_{m+1}, V_{m+1}$

$K_2, V_2$

$K_{n+1}, V_{n+1}$

102

104

108

106

110

FIG. 2

300

302

304

306

308

310

FIG. 3

# FIG. 4

FIG. 5

## FIG. 6

# FIG. 7

Betriebsmodus "Schub-Hochschalten"

Betriebsmodus "Zug-Hochschalten"

802

800

Betriebsmodus "Schub-Herunterschalten"

Betriebsmoden "Zug-Herunterschalten"

FIG. 8

**Europäisches Patentamt**
**European Patent Office**
**Office européen des brevets**

## EUROPÄISCHER RECHERCHENBERICHT

Nummer der Anmeldung

EP 24 19 3776

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/045254 A1 (BULGRIEN GARTH HARVEY [US] ET AL) 15. Februar 2018 (2018-02-15)<br><br>* Ansprüche 1-20; Abbildungen 1,2 *<br>----- | 1-3,5,6, 9-11,13, 14 | INV. F16D48/06 |
| X | DE 10 2017 119594 A1 (GM GLOBAL TECH OPERATIONS LLC [US]) 1. März 2018 (2018-03-01)<br>* Absatz [0022]; Ansprüche 1-7 *<br>----- | 1-3,5,6, 9-11,13, 14 | |
| A | US 2010/261577 A1 (MACFARLANE KEVIN [US] ET AL) 14. Oktober 2010 (2010-10-14)<br>* Ansprüche 1-4 *<br>----- | 1-14 | |
| A | US 11 028 887 B2 (GREAT WALL MOTOR CO LTD [CN]) 8. Juni 2021 (2021-06-08)<br>* Ansprüche 1-6 *<br>----- | 1-14 | |
| A | US 10 830 294 B2 (HYUNDAI MOTOR CO LTD [KR]; KIA MOTORS CORP [KR]) 10. November 2020 (2020-11-10)<br>* Ansprüche 1-10 *<br>----- | 1-14 | RECHERCHIERTE SACHGEBIETE (IPC)<br><br>F16D |

Der vorliegende Recherchenbericht wurde für alle Patentansprüche erstellt

| Recherchenort | Abschlußdatum der Recherche | Prüfer |
|---|---|---|
| München | 28. Januar 2025 | García y Garmendia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

# EP 4 692 585 A1

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-01-2025

| Im Recherchenbericht angeführtes Patentdokument | Datum der Veröffentlichung | Mitglied(er) der Patentfamilie | Datum der Veröffentlichung |
|---|---|---|---|
| US 2018045254 A1 | 15-02-2018 | KEINE | |
| DE 102017119594 A1 | 01-03-2018 | CN 107795606 A | 13-03-2018 |
| | | DE 102017119594 A1 | 01-03-2018 |
| | | US 9803704 B1 | 31-10-2017 |
| US 2010261577 A1 | 14-10-2010 | CN 101858428 A | 13-10-2010 |
| | | DE 102010016115 A1 | 21-10-2010 |
| | | US 2010261577 A1 | 14-10-2010 |
| US 11028887 B2 | 08-06-2021 | AU 2019214697 A1 | 24-09-2020 |
| | | CN 109404437 A | 01-03-2019 |
| | | EP 3748187 A1 | 09-12-2020 |
| | | RU 2742402 C1 | 05-02-2021 |
| | | US 2020378454 A1 | 03-12-2020 |
| | | WO 2019149226 A1 | 08-08-2019 |
| US 10830294 B2 | 10-11-2020 | DE 102019124867 A1 | 01-10-2020 |
| | | KR 20200113528 A | 07-10-2020 |
| | | US 2020309206 A1 | 01-10-2020 |

EPO FORM P0461

Für nähere Einzelheiten zu diesem Anhang : siehe Amtsblatt des Europäischen Patentamts, Nr.12/82